# EUROPEAN PATENT SPECIFICATION

(11) **EP 4 425 970 B1**
(45) Date of publication and mention of the grant of the patent: **28.10.2026**
(21) Application number: 22914465.4
(22) Date of filing: 21.12.2022
(51) Int. Cl.: H04W 4/06, H04W 28/16, H04W 76/27, H04W 76/40

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 31.12.2021 CN 202111672790; 11.03.2022 CN 202210239509
(43) Date of publication of application: 04.09.2024
(73) Proprietor: Huawei Technologies Co., Ltd., Shenzhen, Guangdong 518129 (CN)
(72) Inventor: XU, Shengfeng, Shenzhen, Guangdong 518129 (CN); LI, Meng, Shenzhen, Guangdong 518129 (CN); YANG, Yanmei, Shenzhen, Guangdong 518129 (CN)
(74) Representative: Pfenning, Meinig & Partner mbB
(86) International application number: PCT/CN2022/140808
(87) International publication number: WO 2023/125211

(56) References cited:
- WO-A1-2021/259129
- CN-A- 101 163 321
- CN-A- 102 238 478
- US-A1- 2016 119 762
- US-A1- 2021 068 003
- INTEL CORPORATION: "Discussion on SA2 LS and Multicast Session Activation", vol. RAN WG2, no. Electronic meeting; 20210412 - 20210420, 2 April 2021 (2021-04-02), XP052174413, Retrieved from the Internet <URL:https://ftp.3gpp.org/tsg_ran/WG2_RL2/TSGR2_113bis-e/Docs/R2-2102838.zip R2-2102838-Discussion on SA2 LS and multicast session activation.docx> [retrieved on 20210402]
- ERICSSON: "Discussion on SA2 LS on 5MBS progress and issues to address", vol. RAN WG3, no. Online; 20210125 - 20210204, 15 January 2021 (2021-01-15), XP051969029, Retrieved from the Internet <URL:https://ftp.3gpp.org/tsg_ran/WG3_Iu/TSGR3_111-e/Docs/R3-210632.zip R3-210632.doc> [retrieved on 20210115]
- HUAWEI ET AL: "Discussion and proposal of RRC Inactive multicast MBS reception", vol. SA WG2, no. e-meeting; 20220214 - 20220225, 28 January 2022 (2022-01-28), XP052124802, Retrieved from the Internet <URL:https://ftp.3gpp.org/tsg_sa/WG2_Arch/TSGS2_149E_Electronic_2022-02/Docs/S2-2200599.zip S2-2200599_Discussion and proposal on the solution for RRC Inactive reception for 5MBS.docx> [retrieved on 20220128]

## Description

### TECHNICAL FIELD

Embodiments of this application relate to the field of communication technologies, and in particular, to a communication method, a communication apparatus, a chip system, a computer-readable storage medium, a computer program product, and a communication system.

### BACKGROUND

In view of a problem that multicast/broadcast services (where multicast may also be understood as group cast, or replaced with groupcast) such as video have an increasingly strong impact on a mobile communication network, the mobile communication network (for example, the 5th generation (the 5th generation, 5G) mobile communication network) effectively solves the problem by supporting transmission of the multicast/broadcast services (multicast/broadcast services, MBSs).

Currently, a multicast/broadcast service may be transmitted in two manners: a protocol data unit (protocol data unit, PDU) session or an MBS session. In the PDU session manner, different resources are separately established for different user equipment (user equipment, UE) for transmission of the multicast/broadcast service. This seriously results in a waste of network resources. In the MBS session manner, a same resource is established for different UE for transmission of the multicast/broadcast service. The waste of network resources can be reduced, but still exists. Therefore, how to reduce the waste of network resources of the MBS becomes an urgent problem to be resolved.

INTEL CORPORATION: "Discussion on SA2 LS and Multicast Session Activation", 3GPP DRAFT; R2-2102838, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic meeting; 20210412 - 20210420 2 April 2021 (2021-04-02), XP052174413, Retrieved from the Internet: URL:https://ftp.3gpp.org/tsg_ran/WG2_RL2/TSGR2_113bis-e/Docs/R2-2102838.zip R2-2102838-Discussion on SA2 LS and multicast session activation.docx, discloses the SA2 LS and multicast session activation. In particular, an analysis of the multicast session call flow impact to RAN is provided, and it is further discussed how NG-RAN can notify/decide multicast session activation/deactivation to UEs according to session activation/deactivation defined by SA2. Moreover, a reply feedback to SA2 liaison is also proposed.

### SUMMARY

The above mentioned problems are solved by the communication method, the communication apparatus, the chip system, the computer-readable storage medium, the computer program product, the communication system according to the claims. This application provides the communication method and the apparatus, to save network resources.

The invention is set out in the appended set of claims. According to a first aspect, this application provides a communication method, including:

A multicast/broadcast session management network element obtains reference information of a first MBS session, where the reference information of the first MBS session indicates a feature of the first MBS session. The multicast/broadcast session management network element sends the reference information of the first MBS session to a session management network element or an access and mobility management network element. The session management network element or the access and mobility management network element sends the reference information of the first MBS session to an access network device. Correspondingly, the access network device receives the reference information of the first MBS session from the session management network element. The access network device triggers, based on the reference information of the first MBS session, a first receive end corresponding to the first MBS session to enter an idle state or a radio resource control RRC inactive state.

It should be noted that the feature of the first MBS session may be understood as performance, requirement information, priority information, and the like of the first MBS session. This is not specifically limited in this application. The first receive end corresponding to the first MBS session may be understood as a terminal that receives service data by using the first MBS session, that is, a terminal that receives service data of the first MBS session, or may be understood as a terminal that accesses the first MBS session. The first receive end may be one or more terminals. This is not specifically limited in this application. Service data of an MBS session is service data supported by the MBS session, or service data transmitted by using the MBS session, and the service data is MBS data.

In addition, the access network device triggers, based on the reference information of the first MBS session, the first receive end corresponding to the first MBS session to enter the idle state or the RRC inactive state. In actual application, the access network device may directly trigger, by using the reference information of the first MBS session, the first receive end corresponding to the first MBS session to enter the idle state or the RRC inactive state, or may perform data processing on the reference information of the first MBS session (for example, performing data analysis on the reference information of the first MBS session based on artificial intelligence (artificial intelligence, AI)), to trigger the first receive end corresponding to the first MBS session to enter the idle state or the RRC inactive state. This is not specifically limited herein.

Usually, the access network device may have a plurality of MBS sessions. A receive end corresponding to the MBS session usually receives the service data of the MBS session in an RRC connected state. It consumes a large quantity of processing resources of the access network device for the access network device to maintain the receive end corresponding to the MBS session to be in the RRC connected state. However, because a device capability of the access network device is limited and processing resources are limited (for example, the processing capability is limited or storage space is limited), the access network device cannot support receive ends corresponding to a large quantity of MBS sessions being in the RRC connected state. According to the method provided in this application, the access network device may separately trigger, based on reference information of each MBS session, a receive end corresponding to each MBS session to enter the idle state or the RRC inactive state. This prevents the access network device from occupying, for a long period of time, processing resources that are used to maintain the receive end of the MBS session to be in the RRC connected state, and can save processing resources of the access network device.

The reference information of the first MBS session includes one or more of the following: a priority of the first MBS session, a reliability requirement of the first MBS session, latency of the first MBS session, an allocation and retention priority (allocation and retention priority, ARP) of the first MBS session, first indication information indicating that a receive end in the idle state or the RRC inactive state is allowed to receive the service data of the first MBS session, and second indication information indicating that a quality of service (quality of service, QoS) requirement of the first MBS session is allowed not to be met.

The reliability requirement of the first MBS session may be a highest reliability requirement in reliability requirements of 5G QoS identifiers (5th generation quality of service identifiers, 5QIs) of QoS flows of the first MBS session; the latency of the first MBS session is lowest latency in latency of the 5QIs of the QoS flows of the first MBS session; and the ARP of the first MBS session is a lowest ARP in ARPs of the QoS flows of the first MBS session.

With reference to the reference information of the first MBS session, the access network device may trigger the first receive end corresponding to the first MBS session to enter the idle state or the RRC inactive state. This manner avoids processing resource consumption of the access network device in maintaining, for a long period of time, the receive end to be in the RRC connected state, and can save the processing resources of the access network device.

In an optional manner, the multicast/broadcast session management network element receives an MBS session create request, where the MBS session create request includes the reference information of the first MBS session; receives policy information of the first MBS session from a policy management network element, where the policy information of the first MBS session includes the reference information of the first MBS session; or receives QoS information of the first MBS session from an application function or a policy management network element, and determines the reference information of the first MBS session based on the QoS information of the first MBS session.

In this manner, an existing solution procedure (such as an MBS session create request and MBS policy management) may be reused as much as possible to obtain the reference information of the first MBS session, so that the reference information of the first MBS session is obtained without increasing procedure complexity.

In an optional manner, when the reference information of the first MBS session includes the priority of the first MBS session, if the priority of the first MBS session is lower than a first preset priority, the access network device triggers the first receive end corresponding to the first MBS session to enter the idle state or the RRC inactive state. Alternatively, if the priority of the first MBS session is a lowest priority in priorities of all MBS sessions of the access network device, the access network device triggers the first receive end corresponding to the first MBS session to enter the idle state or the RRC inactive state.

It should be noted that all MBS sessions of the access network device in this application may be understood as all MBS sessions for which the access network device currently provides services, or all MBS sessions established by using the access network device.

In this application, the priority may be a priority of a performance requirement, a priority of a quality requirement, and/or the like. A lower priority may indicate that a service requirement of the MBS session is not high or is not important. Therefore, in this application, the access network device triggers a first receive end corresponding to an MBS session (namely, the first MBS session) whose priority is the lowest or whose priority is lower than the first preset priority in all MBS sessions of the access network device to enter the idle state or the RRC inactive state. On a premise that service data transmission of a high-priority MBS session is preferentially guaranteed, this saves the processing resources of the access network device.

In an optional manner, when the reference information of the first MBS session includes the reliability requirement of the first MBS session, if the reliability requirement of the first MBS session is lower than a first threshold, the first receive end corresponding to the first MBS session is triggered to enter the idle state or the RRC inactive state. Alternatively, if the reliability requirement of the first MBS session is a lowest reliability requirement in reliability requirements of all MBS sessions of the access network device, the first receive end corresponding to the first MBS session is triggered to enter the idle state or the RRC inactive state.

In this application, if the reliability requirement of the first MBS session is the lowest (for example, all MBS sessions of the access network device include an MBS session 1 and an MBS session 2, a service corresponding to the MBS session 1 is an MBS 1, a reliability requirement of the MBS session 1 is 0.9, a service corresponding to the MBS session 2 is an MBS 2, a reliability requirement of the MBS session 2 is 0.99, and because 0.9 < 0.99, the reliability requirement of the MBS session 1 is lower than that of the MBS session 2) or lower than the first threshold in reliability requirements of all MBS sessions of the access network device, it indicates that a service requirement of the first MBS session is not high or is not important. Therefore, in this application, the access network device triggers a first receive end corresponding to an MBS session (namely, the first MBS session) whose reliability requirement is the lowest or whose reliability requirement is lower than the first threshold in the reliability requirements of all the MBS sessions of the access network device to enter the idle state or the RRC inactive state. This manner not only ensures normal transmission of a service with a high reliability requirement, but also saves the processing resources of the access network device.

In an optional manner, when the reference information of the first MBS session includes the latency of the first MBS session, if the latency of the first MBS session is greater than a second threshold, the first receive end corresponding to the first MBS session is triggered to enter the idle state or the RRC inactive state. Alternatively, if the latency of the first MBS session is highest latency in latency of all MBS sessions of the access network device, the first receive end corresponding to the first MBS session is triggered to enter the idle state or the RRC inactive state.

In this application, if the latency of the first MBS session is the highest (for example, all MBS sessions of the access network device include an MBS session 1 and an MBS session 2, a service corresponding to the MBS session 1 is an MBS 1, latency of the MBS session 1 is 5 ms, a service corresponding to the MBS session 2 is an MBS 2, latency of the MBS session 2 is 10 ms, and because 5 < 10, the latency of the MBS session 2 is higher than that of the MBS session 1) or higher than that of the second threshold in latency of all MBS sessions of the access network device, it indicates that the service requirement of the first MBS session is not high or is not important. Therefore, in this application, the access network device triggers a first receive end corresponding to an MBS session whose latency is the highest or whose latency is higher than that of the second threshold in the latency of all the MBS sessions of the access network device to enter the idle state or the RRC inactive state. This not only ensures normal transmission of a service with a high latency requirement, but also saves the processing resources of the access network device.

In an optional manner, when the reference information of the first MBS session includes the ARP of the first MBS session, if the ARP of the first MBS session is greater than a third threshold, the first receive end corresponding to the first MBS session is triggered to enter the idle state or the RRC inactive state. Alternatively, if the ARP of the first MBS session is a highest ARP in ARPs of all MBS sessions of the access network device, the first receive end corresponding to the first MBS session is triggered to enter the idle state or the RRC inactive state.

In this application, if the ARP of the first MBS session is the lowest (for example, all MBS sessions of the access network device include an MBS session 1 and an MBS session 2, a service corresponding to the MBS session 1 is an MBS 1, an ARP of the MBS session 1 is 12, a service corresponding to an MBS session 2 is the MBS 2, an ARP of MBS session 2 is 3, and because 12 > 3 (where a value of the ARP ranges from 1 to 15, and a larger ARP value indicates a lower priority), the ARP of the MBS session 1 is lower than the ARP of the MBS session 2) or higher than that of the third threshold in ARPs of all MBS sessions of the access network device, it indicates that the service requirement of the first MBS session is not high or is not important. Therefore, in this application, the access network device triggers a first receive end corresponding to an MBS session whose ARP is the highest or whose ARP is greater than that of the third threshold in all MBS sessions of the access network device to enter the idle state or the RRC inactive state. This does not affect execution of another service, and can save the processing resources of the access network device.

In an optional manner, the first receive end is one or more of receive ends corresponding to the first MBS session.

In an optional manner, before that the access network device triggers a first receive end corresponding to the first MBS session to enter an idle state or an RRC inactive state, the method further includes: The access network device determines that no service data other than the service data of the first MBS session is transmitted on the first receive end. Alternatively, the access network device determines that no service data other than the service data of the first MBS session exists on the first receive end. In this way, normal transmission of other service data on the first receive end can be avoided.

In an optional manner, the method further includes: The access network device receives reference information of the first receive end from the session management network element. The reference information of the first receive end of the session management network element may come from the multicast/broadcast session management network element, or may come from a unified data management network element. The reference information of the first receive end may include one or more of the following: a priority of the first receive end in the first MBS session, and third indication information indicating that the first receive end is allowed to receive the service data of the first MBS session in the idle state or the RRC inactive state. That the access network device triggers a first receive end corresponding to the first MBS session to enter an idle state or an RRC inactive state includes: The access network device triggers, based on the reference information of the first receive end, the first receive end to enter the idle state or the RRC inactive state.

It should be noted that, because different receive ends corresponding to the first MBS are different (for example, subscription differences of different terminals), to ensure MBS service transmission performance of a gold terminal user, in this application, the first receive end is further triggered based on the reference information of the first receive end to enter the idle state or the RRC inactive state, to ensure that a high-priority receive end normally receives the service data of the first MBS session.

In an optional manner, the MBS session create request carries the reference information of the first receive end, or the policy information of the first MBS session includes the reference information of the first receive end.

In an optional manner, when the reference information of the first receive end includes the priority of the first receive end in the first MBS session, if the priority of the first receive end in the first MBS session is lower than a second preset priority, the access network device triggers the first receive end to enter the idle state or the RRC inactive state. Alternatively, if the priority of the first receive end in the first MBS session is a lowest priority in priorities of all receive ends corresponding to the first MBS session, the access network device triggers the first receive end to enter the idle state or the RRC inactive state.

In this application, all receive ends corresponding to the first MBS session may be understood as all terminals that receive service data by using the first MBS session of the access network device, that is, all terminals that receive the service data of the first MBS session of the access network device, or may be understood as all terminals that access the first MBS session by using the access network device. All the terminals may be all terminals that currently receive the service data by using the first MBS session of the access network device.

In this application, a lower priority indicates that a service requirement of the receive end is not high or is not important. Therefore, the access network device triggers a first receive end whose priority is the lowest or whose priority is lower than the second preset priority in the first MBS session of the access network device to enter the idle state or the RRC inactive state. This does not affect execution of a service of another terminal on the receive end corresponding to the first MBS session, and can save the processing resources of the access network device.

In an optional manner, before sending the reference information of the first receive end to the session management network element, the multicast/broadcast session management network element may receive identification information of the first receive end from the session management network element. The multicast/broadcast session management network element sends the reference information of the first receive end to the session management network element based on the identification information. In this manner, reference information of an actually involved receive end is sent as required. This avoids sending reference information of all receive ends of the first MBS session to the session management network element, and can save processing and transmission resources.

In an optional manner, before that the access network device triggers, based on the reference information of the first MBS session, a first receive end corresponding to the first MBS session to enter an idle state or an RRC inactive state, the access network device determines that a quantity of terminals that are in the RRC connected state and that receive service data of an MBS session is greater than a preset value; or the access network device determines that a quantity of terminals in the RRC connected state is greater than a preset value. In this manner, only when the access network device is congested or the processing capability is insufficient, the receive end is triggered to enter the idle state or the RRC inactive state. When the access network device is not congested or is lightly loaded (a quantity of accessed terminals is small), all receive ends may be supported in receiving the service data of the MBS session in the RRC connected state, thereby better meeting service transmission performance of the MBS session.

In an optional manner, before that the access network device triggers, based on the reference information of the first MBS session, a first receive end corresponding to the first MBS session to enter an idle state or an RRC inactive state, the access network device does not receive fourth indication information. The fourth indication information indicates that the first receive end is not allowed to receive the service data of the first MBS session in the idle state or the RRC inactive state, or indicates that the first receive end provides a relay service for the first MBS session. In this manner, it is preferentially ensured that a relay terminal normally receives the service data of the first MBS session, to enable the relay terminal to normally send the service data of the first MBS session to a remote terminal.

### BRIEF DESCRIPTION OF DRAWINGS

FIG. 1 is a schematic diagram of a communication system;
FIG. 2 is a schematic flowchart of a communication method according to an embodiment of this application;
FIG. 3 is a schematic flowchart of another communication method according to an embodiment of this application;
FIG. 4 is a schematic flowchart of another communication method according to an embodiment of this application;
FIG. 5 is a schematic flowchart of still another communication method according to an embodiment of this application;
FIG. 6 is a schematic flowchart of still another communication method according to an embodiment of this application;
FIG. 7 is a schematic diagram of a structure of a communication apparatus according to an embodiment of this application;
FIG. 8 is a schematic diagram of a structure of another communication apparatus according to an embodiment of this application; and
FIG. 9 is a schematic diagram of a structure of another communication apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more than two. Therefore, for implementations of the apparatus and the method, refer to each other. Details of repeated parts are not described.

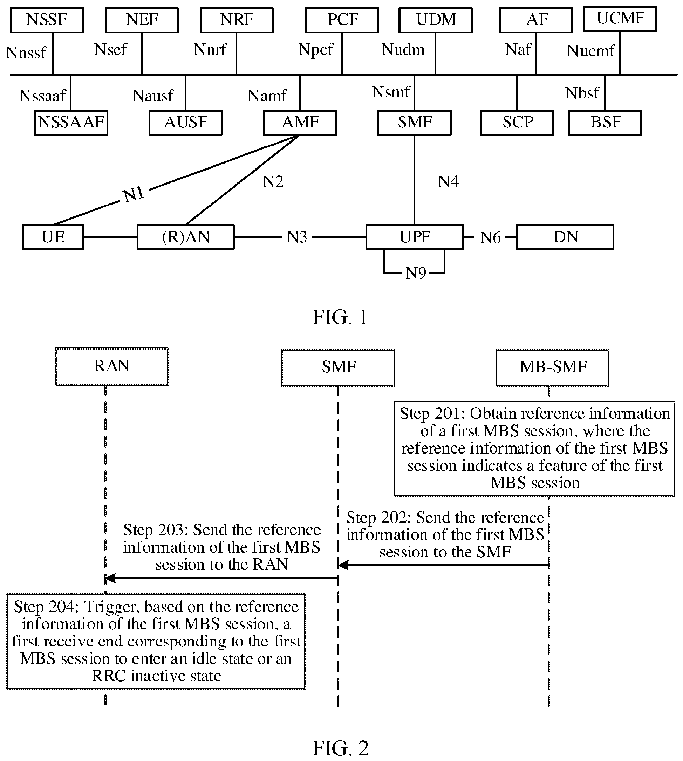

FIG. 1 is a schematic diagram of a mobile communication network architecture. The network architecture includes a terminal, an access network device, an access and mobility management function, a session management function, a user plane function, a policy control function, a network slice selection function, a network slice-specific authentication and authorization function, a network repository function, a network data analytics function, a unified data management function, a unified data repository function, an authentication service function, a network exposure function, a user equipment radio capability management function, a binding support function, an application function, and a data network (data network, DN) connected to a carrier network. The terminal may access a wireless network via an access node at a current location. The terminal may send service data to the data network and receive service data from the data network via the access network device and the user plane function.

The access and mobility management function is mainly used for terminal attachment, mobility management, a tracking area update procedure, and the like in a mobile network. In a 5G communication system, the access and mobility management function may be an access and mobility management function (access and mobility management function, AMF). In a future communication system (for example, a 6G communication system), the access and mobility management function may still be an AMF, or may have another name. This is not limited in this application.

The session management function is mainly used for session management in a mobile network. Specific functions may be, for example, allocating an internet protocol address to the terminal, selecting a user plane function that provides a packet forwarding function, and the like. In the 5G communication system, the session management function may be a session management function (session management function, SMF) network element. In a future communication system (for example, the 6G communication system), the session management function may still be an SMF, or may have another name. This is not limited in this application. The SMF may be used to create a unicast session or a PDU session, and is mainly used for establishment, modification, and release of the unicast session or the PDU session. This application further relates to a multicast/broadcast session management network element. The multicast/broadcast session management network element may be a multicast session management network element (multicast/broadcast-session management function, MB-SMF), and is mainly used for MBS session management in the mobile network, for example, establishment, modification, and release of an MBS session.

The user plane function is mainly used for processing a user packet, for example, forwarding and charging for the user packet. In the 5G communication system, the user plane function may be a user plane function (user plane function, UPF). In a future communication system (for example, the 6G communication system), the user plane function may still be a UPF, or may have another name. This is not limited in this application.

The policy control function includes a policy control function, a charging policy control function, QoS control, and the like. In the 5G communication system, the policy control function may be a policy control function (policy control function, PCF). In a future communication system (for example, the 6G communication system), the policy control function may still be a PCF, or may have another name. This is not limited in this application.

The network slice selection function is mainly used for selecting an appropriate network slice for a service of a terminal. In the 5G communication system, the network slice selection function may be a network slice selection function (network slice selection function, NSSF). In a future communication system (for example, the 6G communication system), the network slice selection function may still be an NSSF, or may have another name. This is not limited in this application.

The network slice-specific authentication and authorization function (network slice-specific authentication and authorization function, NSSAAF) is mainly used for authentication and authorization of a specific network slice accessed by a terminal.

The network repository function is used for providing registration and discovery of a network function or a service provided by a network function. In the 5G communication system, the network repository function may be a network repository function (network repository function, NRF). In a future communication system (for example, the 6G communication system), the network repository function may still be an NRF, or may have another name. This is not limited in this application.

The network data analytics function may collect data from each network function, such as the policy control function, the session management function, the user plane function, the access management function, and the application function (by using the network exposure function), and perform analysis and prediction. In the 5G communication system, the network data analytics function may be a network data analytics function (network data analytics function, NWDAF). In a future communication system (for example, the 6G communication system), the network data analytics function may still be an NWDAF, or may have another name. This is not limited in this application.

The unified data management function is used for managing subscription information of a terminal. In the 5G communication system, the unified data management function may be a unified data management (unified data management, UDM) function. In a future communication system (for example, the 6G communication system), the unified data management function may still be a UDM function, or may have another name. This is not limited in this application.

The unified data repository function is mainly used for storing structured data information, including subscription information, policy information, and network data or service data defined in a standard format. In the 5G communication system, the unified data repository function may be a unified data repository (unified data repository, UDR) function. In a future communication system (for example, the 6G communication system), the unified data repository function may still be a UDR function, or may have another name. This is not limited in this application.

The authentication service function is mainly used for performing security authentication on a terminal. In the 5G communication system, the authentication service function may be an authentication server function (authentication server function, AUSF). In a future communication system (for example, the 6G communication system), the authentication service function may still be an AUSF, or may have another name. This is not limited in this application.

The network exposure function may expose some functions of a network to an application in a controlled manner. In the 5G communication system, the network exposure function may be a network exposure function (network exposure function, NEF). In a future communication system (for example, the 6G communication system), the network exposure function may still be an NEF, or may have another name. This is not limited in this application.

The user equipment radio capability management function is used for storing and managing a radio capability of a terminal in a network. In the 5G communication system, the user equipment radio capability management function may be a user equipment radio capability management function (user equipment radio capability management function, UCMF). In a future communication system (for example, 6G communication system), the terminal radio capability management function may still be a UCMF, or may have another name. This is not limited in this application.

The binding support function is used for maintaining a correspondence between an internet protocol (internet protocol, IP) address and a service function between user networks. In the 5G communication system, the binding support function may be a binding support function (binding support function, BSF). In a future communication system (for example, the 6G communication system), the binding support function may still be a BSF, or may have another name. This is not limited in this application.

The application function may provide service data of various applications for a control plane function of a communication network of an operator, or obtain data information and control information of a network from a control plane function of a communication network. In the 5G communication system, the application function may be an application function (application function, AF). In a future communication system (for example, the 6G communication system), the application function may still be an AF, or may have another name. This is not limited in this application.

The data network is mainly used for providing a data transmission service for a terminal. The data network may be a private network, for example, a local area network, may be a public data network (public data network, PDN), for example, Internet (Internet), or may be a dedicated network jointly deployed by operators, for example, a configured IP multimedia core network subsystem (internet protocol multimedia core network subsystem, IMS) service.

It should be noted that in embodiments of this application, a function may alternatively be referred to as a network element, a network function or a function entity, a device, or the like. For example, an access and mobility management function may also be referred to as an access and mobility management network element, an access and mobility management network function, or an access and mobility management function entity. Names of the functions are not limited in this application. A person skilled in the art may change the names of the functions to other names to perform a same function. This falls within the protection scope of this application.

After UE registers with a network, performing connection management (connection management, CM) on the UE mainly includes managing establishment and release of a non-access stratum (non-access stratum, NAS) signaling connection between the UE and the AMF. The NAS signaling connection includes two parts: a connection between the UE and an access network (access network, AN) and an N2 connection between the AN and the AMF. The NAS signaling connection between the UE and the AMF has two states: a CM-IDLE state (that is, an idle state) and a CM-CONNECTED state (that is, an RRC connected state). To release an air interface resource as needed while avoiding a complex procedure, in the 5G system, a sub-state of the RRC connected state is newly introduced for UE accessing a 3rd generation partnership project (3rd generation partnership project, 3GPP): a radio resource control inactive (RRC inactive) state, which is referred to as an RRC inactive state for short.

Currently, a multicast/broadcast service may be transmitted in two manners: a PDU session or a multicast session. However, a waste of network resources exists. To bear a multicast service and ensure channel quality and data reliability, the UE remains in the RRC connected state. If the UE is in the RRC connected state for a long period of time, scheduling resources of a base station are wasted. In addition, public safety (Public safety) requires that one RAN supports broadcast of 800 terminals. Currently, due to a limited RAN capability, 800 users in the RRC connected state may not be supported in receiving multicast data at the same time. Therefore, how to reduce the waste of network resources of the multicast/broadcast service becomes an urgent problem to be solved.

To reduce scheduling resource waste, this application provides a communication method shown in FIG. 2. The method may be performed by an access network device, may be performed by a multicast/broadcast session management network element, or may be performed through interaction between an access network device, a session management network element, and a multicast/broadcast session management network element. The access network device may be a transmission reception point (transmission reception point, TRP), a 5G base station (gNodeB, gNB), a chip, or the like. The session management network element may be an SMF, a chip of an SMF, or the like. The multicast/broadcast session management network element may be an MB-SMF or a chip of an MB-SMF. This is not specifically limited in this application. The following describes how to perform the method through interaction between the access network device, the session management network element, and the multicast/broadcast session management network element. FIG. 2 is described below by using an example in which the access network device is a RAN, the session management network element is an SMF, and the multicast/broadcast session management network element is an MB-SMF.

Step 201: The MB-SMF obtains reference information of a first MBS session.

The reference information of the first MBS session may indicate a feature of the first MBS session. The feature of the first MBS session may be understood as at least one type of the following information: performance of the first MBS session (for example, transmission performance and reliability assurance performance of the first MBS session), requirement information of the first MBS session (for example, a rate requirement, a latency requirement, and a reliability requirement of the first MBS session), priority information of the first MBS session (for example, importance of the first MBS session), or the like. This is not specifically limited in this application.

Specifically, the reference information of the first MBS session may include one or more of the following: a priority of the first MBS session, a reliability requirement of the first MBS session, latency of the first MBS session, an ARP of the first MBS session, first indication information indicating that a receive end in an idle state or an RRC inactive state is allowed to receive service data of the first MBS session, and second indication information indicating that quality of service QoS of the first MBS session is allowed not to meet a QoS requirement.

It should be noted that the reference information of the first MBS session may further include an identifier of the first MBS session. The reference information of the first MBS session may further include other information, for example, service information or a service type carried by the first MBS session, for example, a video service, a voice service, or a short message service carried by the first MBS session. This is not limited in this application.

It should be noted that one MBS session may serve a plurality of terminals, in other words, a terminal may receive service data of a multicast/broadcast service by accessing an MBS session. In addition, one terminal may alternatively receive service data of different multicast/broadcast services by accessing different MBS sessions. In addition, in actual application, the MB-SMF may further obtain reference information of another MBS session. The reference information of the first MBS session is merely used as an example for description herein. That the MB-SMF obtains only the reference information of the first MBS session is not limited herein.

In addition, the MB-SMF may preconfigure the reference information of the first MBS session, may obtain the reference information of the first MBS session from another network element, or may preconfigure some information in the reference information of the first MBS session, and obtain some information in the reference information of the first MBS session from another network element. This is not specifically limited in this application. To better describe the solutions in this application, the reference information of the first MBS session may be obtained in the following manners. Details are as follows.

Manner 1: The MB-SMF may receive an MBS session create request, where the MBS session create request includes the reference information of the first MBS session.

The MB-SMF may receive an MBS session create (MBS session create) request from an application function (such as an AF). The MB-SMF may alternatively receive an MBS session create request from an NEF or a multicast/broadcast service function (multicast/broadcast service function, MBSF). The MB-SMF may alternatively receive an MBS session create request from an AF by using an NEF or an MBSF. A specific source of the MBS session create request is not specifically limited herein in this application.

Manner 2: The MB-SMF receives policy information of the first MBS session from a policy management network element (such as a PCF), where the policy information of the first MBS session includes the reference information of the first MBS session.

Manner 3: The MB-SMF receives QoS information of the first MBS session from an application function or a policy management network element, and determines the reference information of the first MBS session based on the QoS information of the first MBS session.

The QoS information of the first MBS session includes a reliability requirement, an ARP, and the like. For example, there is a correspondence between the QoS information and the priority of the first MBS session, whether the receive end in the idle state or the RRC inactive state is allowed to receive the service data of the first MBS session, and whether a QoS requirement of the first MBS session is allowed not to be met. Therefore, obtaining the QoS information may indirectly determine the reference information of the first MBS session. For example, a low ARP value in the QoS information of the first MBS session corresponds to a high priority of the first MBS session. For example, a high reliability requirement in the QoS information of the first MBS session corresponds to that idle-state reception cannot be performed on the first MBS session. This is merely described herein as an example, and is not specifically limited.

In this manner, an existing solution procedure (such as the MBS session create request and MBS policy management) may be reused as much as possible to obtain the reference information of the first MBS session, so that the reference information of the first MBS session is obtained without increasing procedure complexity.

Step 202: The MB-SMF sends the reference information of the first MBS session to the SMF.

Correspondingly, the SMF receives the reference information of the first MBS session.

Specifically, the MB-SMF may receive an MBS session subscription request message from the SMF, and the MB-SMF returns an MBS session subscription response message to the SMF. The MBS session subscription response message includes the reference information of the first MBS session.

Step 203: The SMF sends the reference information of the first MBS session to the RAN.

Correspondingly, the RAN receives the reference information of the first MBS session.

Specifically, the SMF may place the reference information of the first MBS session in an N2 information (N2 info) container, and send the reference information of the first MBS session to the RAN by using the AMF.

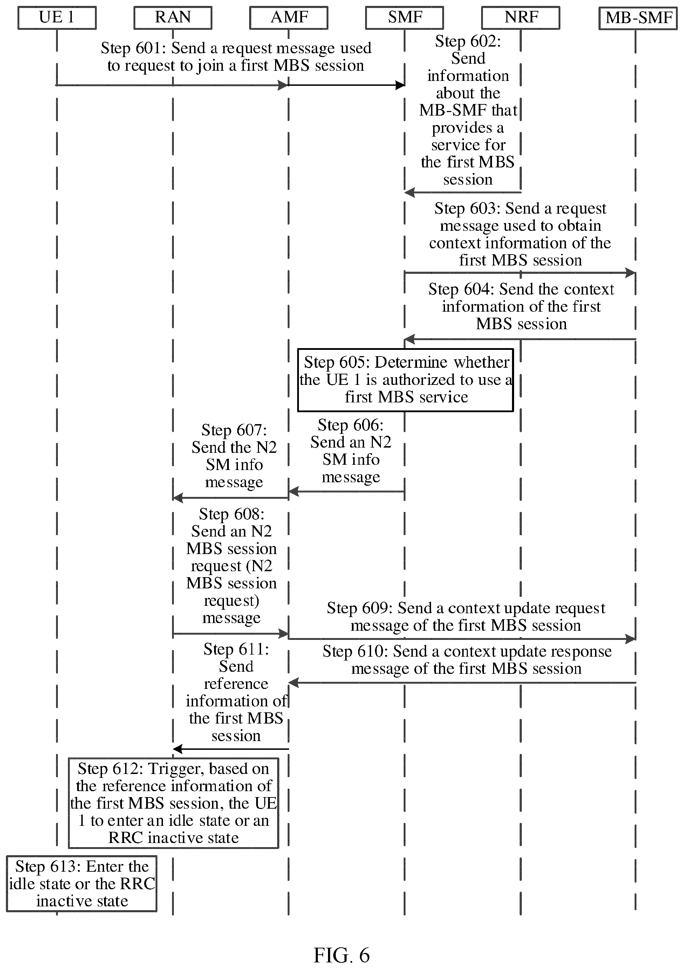

In a shared tunnel (shared tunnel) establishment procedure, step 202 may be replaced with: The MB-SMF sends the reference information of the first MBS session to the AMF. Details are not described herein. For understanding, refer to the following example in FIG. 6. Correspondingly, in step 203, the AMF sends the reference information of the first MBS session to the RAN. It should be understood that, in the shared tunnel establishment procedure, the MB-SMF sends the reference information of the first MBS session to the RAN by using the AMF. The shared tunnel is established between the RAN and a UPF, and is configured to transmit data of the first MBS session. Specifically, the shared tunnel may be shared by two or more receive ends. For example, the two or more receive ends may simultaneously use the shared tunnel to receive the data of the first MBS session.

Step 204: The RAN triggers, based on the reference information of the first MBS session, a first receive end corresponding to the first MBS session to enter the idle state or the RRC inactive state.

It should be noted that the "trigger" action in this application may be implemented by sending, by the RAN, a trigger message or trigger information to the first receive end. The trigger message or the trigger information may be existing or newly added. Specifically, the trigger information may be carried in an existing message. This is not limited. For example, the RAN may send a notification message to the first receive end, where the notification message is used to notify or indicate the first receive end to enter the idle state or the RRC inactive state. For another example, the RAN may send an RRC configuration message or an RRC reconfiguration message to the first receive end, to trigger the first receive end to enter the idle state or the RRC inactive state. Further, the first receive end may enter the idle state or the RRC inactive state based on the trigger message or the trigger information.

In addition, that the first receive end corresponding to the first MBS session enters the idle state or the RRC inactive state may be understood as that the first receive end changes from an RRC connected state to the idle state or the RRC inactive state, or may be further understood that the first receive end receives the service data of the first MBS session in the idle state or the RRC inactive state.

In step 204, the access network device triggers, based on the reference information of the first MBS session, the first receive end corresponding to the first MBS session to enter the idle state or the RRC inactive state. In actual application, the access network device may directly trigger, by using the reference information of the first MBS session, the first receive end corresponding to the first MBS session to enter the idle state or the RRC inactive state, or may perform data processing on the reference information of the first MBS session (for example, performing data analysis on the reference information of the first MBS sessions based on AI), to trigger the first receive end corresponding to the first MBS session to enter the idle state or the RRC inactive state. This is not specifically limited herein.

In addition, the first receive end corresponding to the first MBS session may be understood as a terminal that receives service data by using the first MBS session, that is, a terminal that receives the service data of the first MBS session, or may be understood as a terminal that accesses the first MBS session. The first receive end may be one or more terminals. This is not limited herein. Subsequently, the first receive end corresponding to the first MBS session may be referred to as the first receive end of the first MBS for short.

Service data of an MBS session may be service data supported by the MBS session, or service data transmitted by using the MBS session

Usually, the access network device may have a plurality of MBS sessions. A receive end corresponding to the MBS session usually receives the service data of the MBS session in the RRC connected state. It consumes a large quantity of processing resources of the access network device for the access network device to maintain the receive end corresponding to the MBS session to be in the RRC connected state. However, because a device capability of the access network device is limited and processing resources are limited (for example, the processing capability is limited or storage space is limited), the access network device cannot support receive ends corresponding to a large quantity of MBS sessions being in the RRC connected state. According to the method provided in the foregoing embodiment, the access network device may separately trigger, based on reference information of each MBS session, a receive end corresponding to each MBS session to enter the idle state or the RRC inactive state. This prevents the access network device from occupying, for a long period of time, processing resources that are used to maintain the receive end of the MBS session to be in the RRC connected state, and can save processing resources of the access network device.

In step 204, that the RAN triggers, based on the reference information of the first MBS session, the receive end corresponding to the first MBS session to enter the idle state or the RRC inactive state may be classified into the following cases.

Case 1: The reference information of the first MBS session includes the priority of the first MBS session.

The priority of the first MBS session in the reference information of the first MBS session may be understood as a performance requirement priority, a quality requirement priority, and/or the like of the first MBS session.

In Case 1, step 204 may be specifically implemented in the following two optional manners.

Manner 1: If the priority of the first MBS session is lower than a first preset priority, the RAN triggers the first receive end corresponding to the first MBS session to enter the idle state or the RRC inactive state.

For example, a larger value of a priority specified in a protocol indicates a lower priority, the first preset priority is 3, and the priority of the first MBS session is 4. Because 4 is greater than 3, in other words, the priority of the first MBS session is lower than the first preset priority, the receive end corresponding to the first MBS session is triggered to enter the idle state or the RRC inactive state. In actual application, it may be further specified that a smaller value of the priority indicates a lower priority. This is not specifically limited in this application, and may be flexibly set based on an actual requirement.

Manner 2: If the priority of the first MBS session is a lowest priority in priorities of all MBS sessions of the RAN, the RAN triggers the first receive end corresponding to the first MBS session to enter the idle state or the RRC inactive state.

It should be noted that all the MBS sessions of the RAN in this application may be understood as all MBS sessions for which the RAN currently provides services, or all MBS sessions established by using the RAN. For all the MBS sessions of the RAN below, refer to the descriptions herein for understanding.

For example, a quantity of MBS sessions of the RAN is 3, in other words, three MBS sessions are established on the RAN, and MBS session identifiers are respectively an MBS session 1, an MBS session 2, and an MBS session 3. A priority of the MBS session 1 is 1, a priority of the MBS session 2 is 2, and a priority of the MBS session 3 is 5. It can be learned that the priority of the MBS session 3 is the lowest. In this case, a receive end corresponding to the MBS session 3 (to be specific, the MBS session 3 is the first MBS session) enters the idle state or the RRC inactive state. In addition, the RAN does not trigger a receive end corresponding to the MBS session 1 or the MBS session 2 to enter the idle state or the RRC inactive state.

In this application, a lower priority may indicate that a service requirement of the MBS session is not high or is not important. Therefore, in this application, the access network device triggers a first receive end corresponding to an MBS session (namely, the first MBS session) whose priority is the lowest or whose priority is lower than the first preset priority in all MBS sessions of the access network device to enter the idle state or the RRC inactive state. On a premise that service data transmission of a high-priority MBS session is preferentially guaranteed, this saves the processing resources of the access network device.

Case 2: The reference information of the first MBS session includes the reliability requirement of the first MBS session.

In Case 2, step 204 may be specifically implemented in the following two optional manners.

Manner 1: If the reliability requirement of the first MBS session is lower than a first threshold, the RAN triggers the first receive end corresponding to the first MBS session to enter the idle state or the RRC inactive state.

For example, a packet error rate (packet error rate, PER) corresponding to a reliability requirement of the first threshold is 10⁻⁶, and a packet error rate corresponding to the reliability requirement of the first MBS session is 10⁻³. Because the reliability requirement of the first MBS session is lower than the first threshold, in this case, the receive end corresponding to the first MBS session is triggered to enter the idle state or the RRC inactive state.

Manner 2: If the reliability requirement of the first MBS session is a lowest reliability requirement in reliability requirements of all MBS sessions of the RAN, the RAN triggers the first receive end corresponding to the first MBS session to enter the idle state or the RRC inactive state.

For example, if the quantity of MBS sessions of the RAN is 3, in other words, three MBS sessions are established on the RAN, and MBS session identifiers are an MBS session 1, an MBS session 2, and an MBS session 3. A packet error rate corresponding to a reliability requirement of the MBS session 1 is 10⁻³, a packet error rate corresponding to a reliability requirement of the MBS session 2 is 10⁻⁶, and a packet error rate corresponding to a reliability requirement of the MBS session 3 is 10⁻⁷. It can be learned that the reliability requirement of the MBS session 1 is the lowest. In this case, a receive end corresponding to the MBS session 1 (to be specific, the MBS session 1 is the first MBS session) enters the idle state or the RRC inactive state. In addition, a receive end corresponding to the MBS session 2 or the MBS session 3 is maintained in the RRC connected state, in other words, the receive end corresponding to the MBS session 2 or the MBS session 3 is not triggered to enter the idle state or the RRC inactive state.

The reliability requirement of the first MBS session may be a highest reliability requirement in reliability requirements of 5QIs of QoS flows of the first MBS session. For example, the first MBS session may include a plurality of QoS flows, and 5QI values of different QoS flows may be different. Selecting the highest reliability requirement in the reliability requirements of the 5QIs of the QoS flows as the reliability requirement of the first MBS session may ensure, as much as possible, reliable reception of data of a QoS flow with a higher reliability requirement. It is assumed that the first MBS session includes three QoS flows: a QoS flow 1, a QoS flow 2, and a QoS flow 3. A 5QI value of the QoS flow 1 is 1, and a packet error rate corresponding to a reliability requirement associated with 5QI = 1 is 10⁻³. A 5QI value of the QoS flow 2 is 3, and a packet error rate corresponding to a reliability requirement associated with 5QI = 3 is 10⁻⁶. A 5QI value of the QoS flow 3 is 5, and a packet error rate corresponding to a reliability requirement associated with 5QI = 5 is 10⁻⁹. Because the reliability requirement associated with the 5QI of the QoS flow 3 is the highest, the reliability requirement 10⁻⁹ associated with 5QI = 5 may be used as the reliability requirements of the first MBS session.

The reliability requirement of the first MBS session is determined based on a reliability requirement associated with a 5QI of a QoS flow of the first MBS session. For example, weighted calculation may be performed on reliability requirements associated with 5QIs of all QoS flows of the first MBS session, to determine the reliability requirement of the first MBS session. For example, after the packet error rates corresponding to the reliability requirements associated with the 5QIs of the QoS flow 1 to the QoS flow 3 are summed up, a value ((10⁻³ + 10⁻⁶ + 10⁻⁹) / 3) determined through averaging is used as the reliability requirement of the first MBS session. For another example, the reliability requirement of the first MBS session is determined through multiplying packet error rates corresponding to reliability requirements associated with 5QIs of QoS flows determined based on features of different QoS flows by different weight values. This is not specifically limited in this application.

In this application, if the reliability requirement of the first MBS session is the lowest or lower than the first threshold in reliability requirements of all MBS sessions of the access network device, it indicates that a service requirement of the first MBS session is not high or is not important. Therefore, in this application, the access network device triggers a first receive end corresponding to an MBS session (namely, the first MBS session) whose reliability requirement is the lowest or whose reliability requirement is lower than the first threshold in reliability requirements of all MBS sessions of the access network device to enter the idle state or the RRC inactive state. This manner not only ensures normal transmission of a service with a high reliability requirement, but also saves the processing resources of the access network device.

Case 3: The reference information of the first MBS session includes the latency of the first MBS session.

In Case 3, step 204 may be specifically implemented in the following two optional manners.

Manner 1: If the latency of the first MBS session is greater than a second threshold, the RAN triggers the first receive end corresponding to the first MBS session to enter the idle state or the RRC inactive state.

For example, latency corresponding to the second threshold is 10 milliseconds (ms), and the latency of the first MBS session is 15 ms. Because the latency of the first MBS session is greater than that of the second threshold, the access network device triggers a receive end corresponding to the first MBS session to enter the idle state or the RRC inactive state.

Manner 2: If the latency of the first MBS session is highest latency in latency of all MBS sessions of the RAN, the RAN triggers the first receive end corresponding to the first MBS session to enter the idle state or the RRC inactive state.

For example, if a quantity of MBS sessions of the RAN is 3, MBS session identifiers are an MBS session 1, an MBS session 2, and an MBS session 3. Latency of the MBS session 1 is 20 ms, latency of the MBS session 2 is 15 ms, and latency of the MBS session 3 is 5 ms. It can be learned that the latency of the MBS session 1 is the highest. In this case, a receive end corresponding to the MBS session 1 enters the idle state or the RRC inactive state. In addition, a receive end corresponding to the MBS session 2 or the MBS session 3 is maintained in the RRC connected state, in other words, the receive end corresponding to the MBS session 2 or the MBS session 3 is not triggered to enter the idle state or the RRC inactive state.

The latency of the first MBS session may be lowest latency in latency of the 5QIs of the QoS flows of the first MBS session. For example, the first MBS session may include a plurality of QoS flows, and 5QI values of different QoS flows may be different. Selecting the lowest latency in latency of the 5QIs of the QoS flows as the latency of the first MBS session may ensure, as much as possible, reliable reception of data of a QoS flow with low latency. It is assumed that the first MBS session includes two QoS flows, and identifiers of the QoS flows are a QoS flow 1 and a QoS flow 2. For latency, a 5QI value of the QoS flow 1 is 4, latency associated with 5QI = 4 is 15 ms, a 5QI value of the QoS flow 2 is 3, and latency associated with 5QI = 3 is 10 ms. Because the latency associated with the QoS flow 2 is lower, the latency associated with 5QI = 3 may be used as the latency of the first MBS session.

Optionally, the latency of the first MBS session is determined based on latency associated with the 5QI of the QoS flow of the first MBS session. For example, weighted calculation may be performed on latency associated with 5QIs of all QoS flows of the first MBS session, to determine the latency of the first MBS session. For example, after the latency associated with the 5QIs of the QoS flow 1 and the QoS flow 2 is summed up, a value ((15 + 10) / 2) determined through averaging is used as the latency of the first MBS session. For another example, the latency of the first MBS session is determined through multiplying the latency associated with 5QIs of QoS flows determined based on features of different QoS flows by different weight values. This is not specifically limited in this application.

In this application, if the latency of the first MBS session is the highest or higher than the second threshold in all MBS sessions of the access network device, it indicates that the service requirement of the first MBS session is not high or is not important. Therefore, in this application, the access network device triggers a first receive end corresponding to an MBS session whose latency is the highest or whose latency is higher than that of the second threshold in the latency of all the MBS sessions of the access network device to enter the idle state or the RRC inactive state. This not only ensures normal transmission of a service with a high latency requirement, but also saves the processing resources of the access network device.

Case 4: The reference information of the first MBS session includes the ARP of the first MBS session.

In Case 4, step 204 may be specifically implemented in the following two optional manners.

Manner 1: If the ARP of the first MBS session is greater than a third threshold, the access network device triggers the first receive end corresponding to the first MBS session to enter the idle state or the RRC inactive state.

For example, a value range of the ARP is 1 to 15. A priority of 1 is the highest, and a priority of 15 is the lowest. For example, an ARP value corresponding to the third threshold is 5, and the ARP value of the first MBS session is 2. Because the ARP of the first MBS session is higher than that of the third threshold, the receive end corresponding to the first MBS session is triggered to enter the idle state or the RRC inactive state.

Manner 2: If the ARP of the first MBS session is a highest ARP in ARPs of all MBS sessions of the RAN, the RAN triggers the first receive end corresponding to the first MBS session to enter the idle state or the RRC inactive state.

For example, if a quantity of MBS sessions of the RAN is 3, MBS session identifiers are an MBS session 1, an MBS session 2, and an MBS session 3. An ARP value of the MBS session 1 is 12, an ARP value of the MBS session 2 is 10, and an ARP value of the MBS session 3 is 5. It can be learned that the ARP of the MBS session 1 is the lowest. In this case, a receive end corresponding to the MBS session 1 enters the idle state or the RRC inactive state. In addition, a receive end corresponding to the MBS session 2 or the MBS session 3 is maintained in the RRC connected state, in other words, the receive end corresponding to the MBS session 2 or the MBS session 3 is not triggered to enter the idle state or the RRC inactive state.

The ARP of the first MBS session may be a lowest ARP in ARPs of the QoS flows of the first MBS session. For example, the first MBS session may include a plurality of QoS flows, and ARP values of different QoS flows may be different. Selecting the lowest ARP in ARPs of QoS flows as the ARP of the first MBS session may ensure, as much as possible, reliable reception of data of a QoS flow with a low ARP. It is assumed that the first MBS session includes two QoS flows, and identifiers of the QoS flows are a QoS flow 1 and a QoS flow 2. For an ARP, an ARP value of the QoS flow 1 is 4, and an ARP value of the QoS flow 2 is 3. Because the ARP of the QoS flow 1 is the lower, ARP = 4 may be used as the ARP of the first MBS session.

The ARP of the first MBS session is determined based on the ARP of the QoS flow of the first MBS session. For example, weighted calculation may be performed on ARPs of all QoS flows of the first MBS session, to determine the ARP of the first MBS session. For example, after the ARPs of the QoS flow 1 and the QoS flow 2 are summed up, a value ((4 + 3) / 2) determined through averaging is used as the ARP of the first MBS session. For another example, the ARP of the first MBS session is determined through multiplying the ARPs of QoS flows determined based on features of different QoS flows by different weight values. This is not specifically limited in this application.

In this application, if the ARP of the first MBS session is the lowest or higher than that of the third threshold in ARPs of all MBS sessions of the access network device, it indicates that the service requirement of the first MBS session is not high or is not important. Therefore, in this application, the access network device triggers a first receive end corresponding to an MBS session whose ARP is the highest or whose ARP is greater than that of the third threshold in all MBS sessions of the access network device to enter the idle state or the RRC inactive state. This does not affect execution of another service, and can save the processing resources of the access network device.

Case 5: The reference information of the first MBS session includes first indication information indicating that a receive end in the idle state or the RRC inactive state is allowed to receive the service data of the first MBS session.

In Case 5, step 204 may specifically include: When the reference information of the first MBS session includes the first indication information indicating that the receive end in the idle state or the RRC inactive state is allowed to receive the service data of the first MBS session, the RAN triggers the first receive end corresponding to the first MBS session to enter the idle state or the RRC inactive state.

The first indication information may include an identifier of the first MBS session, and the identifier is used for identifying the first MBS session.

Case 6: The reference information of the first MBS session includes second indication information indicating that the QoS requirement of the first MBS session is allowed not to be met.

In Case 6, step 204 may specifically include: When the reference information of the first MBS session includes the second indication information indicating that the QoS of the first MBS session is allowed not to meet the QoS requirement, the RAN triggers the first receive end corresponding to the first MBS session to enter the idle state or the RRC inactive state.

The second indication information may include the identifier of the first MBS session, and the identifier is used for identifying the first MBS session.

Certainly, in actual application, there is still another case. For example, the reference information of the first MBS session may alternatively be a combination of the foregoing six types of reference information. For example, if the reference information of the first MBS session is the priority of the first MBS session and the first indication information, the RAN may trigger a first receive end corresponding to a first MBS session whose priority is lower than the first preset priority and that meets the first indication information to enter the idle state or the RRC inactive state. If the reference information of the first MBS session is the priority of the first MBS session and the reliability requirement of the first MBS session, the RAN may trigger a first receive end corresponding to a first MBS session whose priority is lower than the first preset priority and whose reliability requirement is lower than the first threshold to enter the idle state or the RRC inactive state. If the reference information of the first MBS session is the priority of the first MBS session, the reliability requirement of the first MBS session, and the first indication information, the RAN may trigger a first receive end corresponding to a first MBS session whose priority is lower than the first preset priority, whose reliability requirement is lower than the first threshold, and that meets a requirement of the first indication information to enter the idle state or the RRC inactive state. Descriptions are merely used as examples herein. In actual application, a plurality of combinations of reference information may be further involved, and are not illustrated one by one herein.

In another implementation, step 204 may be alternatively replaced with that: The RAN maintains, based on the reference information of the first MBS session, the first receive end corresponding to the first MBS session in the RRC connected state, in other words, the first receive end receives the service data of the first MBS session in the RRC connected state.

Specifically, for how the RAN maintains the first receive end corresponding to the first MBS session in the RRC connected state, refer to an opposite implementation of the specific manner in the six cases in which the access network device is based on the reference information of the first MBS session. For example, when the reference information of the first MBS session includes the priority of the first MBS session, the priority of the first MBS session is higher than the first preset priority, the priority of the first MBS session is not the lowest in priorities of all MBS sessions of the access network device, or the priority of the first MBS session is the highest in priorities of all MBS sessions of the access network device, in this case, the first receive end corresponding to the first MBS session is maintained in the RRC connected state. This is merely an example for description herein. For another manner, refer to an opposite implementation of the reference information of the first MBS session. Details are not described herein. In addition, if the quantity of MBS sessions of the RAN is 3, in other words, three MBS sessions are established on a same RAN, and the MBS session identifiers are the MBS session 1, the MBS session 2, and the MBS session 3. If the RAN determines that the first receive end corresponding to the first MBS session (the MBS session 1) is maintained in the RRC connected state, the receive ends corresponding to the MBS session 2 and the MBS session 3 may be triggered to enter the idle state or the RRC inactive state.

It should be noted that, after the RAN obtains the reference information of the first MBS session, and before the receive end of the first MBS session is determined to be triggered to enter the idle state or the RRC inactive state, the method may further include: determining a resource usage status (whether there is a remaining resource or the like) of the RAN, an attribute of a receive end (whether the receive end is a relay device) of an MBS session, or the like. This application is described by using the following two cases. However, in actual application, another case, or a combination of the following two cases, or a combination of the following two cases and another case may be used. This is not specifically limited in this application.

### Case 1: Resource status of the RAN

Case 1 may be specifically implemented in the following two optional manners:
Manner 1: The RAN determines that a quantity of terminals that are in the RRC connected state and that receive service data of an MBS session is greater than a preset value.
Manner 2: The RAN determines that a quantity of terminals that are in the RRC connected state is greater than a preset value.

Specifically, in the two manners, the RAN may locally preconfigure the preset value or obtain the preset value from a network device. The RAN may record the quantity of terminals that are in the RRC connected state or record the quantity of terminals that are in the RRC connected state and that receive the MBS session. This is not specifically limited in this application.

In this manner, only when the access network device is congested or the processing capability is insufficient, the receive end is triggered to enter the idle state or the RRC inactive state. When the access network device is not congested or is lightly loaded (a quantity of accessed terminals is small), all receive ends may be supported in receiving the service data of the MBS session in the RRC connected state, thereby better meeting service transmission performance of the MBS session.

### Case 2: Receive end attribute of the first MBS session

Case 2 may be specifically implemented in the following optional manner: Before step 204, the RAN does not receive fourth indication information from the SMF. The fourth indication information may indicate that the first receive end is not allowed to receive the service data of the first MBS session in the idle state or the RRC inactive state, indicate that the first receive end provides a relay service for the first MBS session, or the like.

Usually, the SMF may determine the fourth indication information by receiving service indication information from the first receive end or a report of the first receive end. The service indication information may indicate the first receive end to provide the relay service for the first MBS session. The report of the first receive end is a remote terminal (namely, a non-relay terminal) report (Remote UE Report) served by the relay terminal. The remote terminal report includes a remote terminal identifier (Remote User ID) and remote terminal information (Remote UE info). The SMF may determine, based on the report of the first receive end, that the first receive end provides the relay service for the first MBS session.

Further, the SMF may send the fourth indication information to the RAN. If the RAN receives the fourth indication information, the RAN does not trigger the first receive end corresponding to the first MBS session to enter the idle state or the RRC inactive state. If the RAN does not receive the fourth indication information, the RAN may trigger, based on the reference information of the first MBS session, the first receive end corresponding to the first MBS session to enter the idle state or the RRC inactive state. For example, if a quantity of first receive ends of the first MBS session in the RAN is 3, identifiers of the first receive ends are UE 1, UE 2, and UE 3, the UE 1 provides a relay service for the first MBS session, and the UE 2 and the UE 3 do not provide a relay service for the first MBS session, the receive ends corresponding to the UE 2 and the UE 3 enter the idle state or the RRC inactive state, and a receive end corresponding to the UE 1 is maintained in the RRC connected state to receive the service data of the first MBS session.

If a resource status of the RAN and a receive end attribute of the MBS session do not meet the requirements, but the reference information of the first MBS session meets the requirements of the foregoing six cases, the access network device may not trigger the receive end of the first MBS session to enter the idle state or the RRC inactive state, and the receive end of the first MBS session may be maintained in the RRC connected state. Correspondingly, if the reference information of the first MBS session does not meet the requirements in the foregoing six cases, and no matter whether the resource status of the RAN and the receive end attribute of the MBS session meet the requirements, the access network device may not trigger the receive end of the first MBS session to enter the idle state or the RRC inactive state, and the receive end of the first MBS session may be maintained in the RRC connected state. In this manner, performance such as reliability of receiving the MBS session by the relay terminal is preferentially ensured, so that the relay terminal can send correct service data of the MBS session to a remote terminal. This prevents the relay terminal from sending incorrect service data of the MBS session to the remote terminal.

Optionally, in another implementation scenario of the foregoing embodiment, before the receive end corresponding to the first MBS session is triggered to enter the idle state or the RRC inactive state in step 204, the method may further include: The RAN determines that no service data other than the service data of the first MBS session is transmitted on the first receive end. Alternatively, the access network device determines that no service data other than the service data of the first MBS session exists on the first receive end.

Specifically, the RAN may set a timer for transmission of service data of the first receive end other than the service data of the first MBS session, and the timer records a length of time in which the first receive end transmits no service data other than the service data of the first MBS session. When the timer expires, the RAN determines that no service data other than the service data of the first MBS session is transmitted on the first receive end.

In this application, the access network device determines that no service data other than the service data of the first MBS session is transmitted on the first receive end. This can avoid affecting normal transmission of other service data of the first receive end.

Optionally, in another implementation scenario of the foregoing embodiment, that the receive end corresponding to the first MBS session is triggered to enter the idle state or the RRC inactive state in step 204 may include: triggering, based on the reference information of the first receive end, the first receive end to enter the idle state or the RRC inactive state.

Specifically, the RAN may further receive reference information of the first receive end from the SMF. The reference information of the first receive end may indicate a feature of the first receive end, and may further indicate a feature of the first receive end in the first MBS. Specifically, the reference information of the first receive end may be reference information of the first receive end in the first MBS session. The RAN may trigger, based on the reference information of the first receive end, the first receive end to enter the idle state or the RRC inactive state.

The reference information of the first receive end includes one or more of the following: a priority of the first receive end in the first MBS session, and third indication information indicating that the first receive end is allowed to receive the service data of the first MBS session in the idle state or the RRC inactive state.

It should be noted that, in actual application, the reference information of the first receive end may further include session identifier information, and the session identifier information may indicate an MBS session to which the reference information belongs or corresponds. The reference information of the first MBS session may further include other information, for example, service information or service type carried by the first MBS session. This is not limited in this application. The session identifier information may be an MBS session ID. This is not limited.

The access network device may trigger, based on the reference information of the first MBS session, the receive end corresponding to the first MBS session to enter the idle state or the RRC inactive state. There may be the following cases.

Case 1: The reference information of the first receive end includes the priority of the first receive end in the first MBS session.

The reference information of the first receive end may indicate the feature of the first receive end. The feature of the first receive end may be understood as at least one type of the following information: performance of the first receive end (for example, transmission performance and reliability assurance performance of the first receive end), requirement information of the first receive end (for example, a rate requirement, a latency requirement, and a reliability requirement of the first receive end), priority information of the first receive end (for example, importance of the first receive end), or the like. This is not specifically limited in this application.

Manner 1: If the priority of the first receive end is lower than a second preset priority, the RAN triggers the first receive end to enter the idle state or the RRC inactive state.

For example, a larger value of a priority specified in a protocol indicates a lower priority, the second preset priority is 3, and the priority of the first receive end in the first MBS session is 4. Because 4 is greater than 3, in other words, the priority of the first receive end is lower than the second preset priority, the first receive end is triggered to enter the idle state or the RRC inactive state. In actual application, it may be further specified that a smaller value of the priority indicates a lower priority. This is not specifically limited in this application, and may be flexibly set based on an actual requirement.

Manner 2: If the priority of the first receive end is a lowest priority in priorities of receive ends corresponding to the first MBS session of the RAN, the RAN triggers the first receive end to enter the idle state or the RRC inactive state. All receive ends corresponding to the first MBS session may be understood as all terminals that receive service data by using the first MBS session of the access network device, that is, all terminals that receive the service data of the first MBS session of the access network device, or may be understood as all terminals that access the first MBS session by using the access network device. All the terminals may be all terminals that currently receive the service data by using the first MBS session of the access network device.

For example, if the quantity of first receive ends of the first MBS session in the RAN is 3, the identifiers of the first receive ends are the UE 1, the UE 2, and the UE 3. A priority of the UE 1 is 1, a priority of the UE 2 is 2, and a priority of the UE 3 is 5. It can be learned that the priority of the UE 3 is the lowest. If the reference information of the first receive end is of the UE 3, the receive end corresponding to the UE 3 enters the idle state or the RRC inactive state (because the priority of the UE 3 is the lowest). If the reference information of the first receive end is not of the UE 3 (the reference information is of the UE 1 or the UE 2), the receive end corresponding to the first receive end does not enter the idle state or the RRC inactive state.

In this application, all receive ends corresponding to the first MBS session may be understood as all terminals that receive service data by using the first MBS session of the access network device, that is, all terminals that receive the service data of the first MBS session of the access network device, or may be understood as all terminals that access the first MBS session by using the access network device. All the terminals may be all terminals that currently receive the service data by using the first MBS session of the access network device.

In this application, a lower priority indicates that a service requirement of the receive end is not high or is not important. Therefore, the access network device triggers a first receive end whose priority is the lowest or whose priority is lower than the second preset priority in the first MBS session of the access network device to enter the idle state or the RRC inactive state. This does not affect execution of a service of another terminal on the receive end corresponding to the first MBS session, and can save the processing resources of the access network device.

Case 2: If the reference information of the first receive end includes the third indication information indicating that the first receive end is allowed to receive the service data of the first MBS session in the idle state or the RRC inactive state, the first receive end is triggered to enter the idle state or the RRC inactive state.

The third indication information may further include the identifier of the first receive end.

Certainly, in actual application, the reference information of the first receive end may alternatively be a combination of the foregoing two types of information. For example, the reference information of the first receive end is the priority of the first receive end in the first MBS session and the third indication information. In this case, the RAN may trigger a first receive end whose priority is lower than the first preset priority and that meets a requirement of the third indication information to enter the idle state or the RRC inactive state. This is merely described as an example herein. In actual application, a plurality of information combinations may be further involved, and this is not illustrated one by one herein.

In addition, the reference information of the first receive end may be carried in the MBS session create request, or may be carried in the policy information of the first MBS session. This is not specifically limited in this application. In addition, to perform targeted sending or save resources, the MB-SMF may alternatively send some reference information of the first receive end to the SMF. For example, before sending the reference information of the first receive end to the SMF, the MB-SMF may receive identification information of the first receive end from the SMF. The MB-SMF sends the reference information of the first receive end to the SMF based on the identification information. For example, the SMF sends the identifiers UE 1 and UE 2 (actually, the first receive end of the first MBS session includes the UE 1, the UE 2, the UE 3, and UE 4) of the first receive end to the MB-SMF, and the MB-SMF only needs to send reference information of the UE 1 and the UE 2 to the SMF. In this manner, processing resources can be saved, and this avoids sending reference information of all receive ends of the first MBS session to the session management network element.

In addition, the reference information of the first receive end may be obtained from a UDM. In a process in which the first receive end establishes a PDU session, the SMF obtains MBS session subscription data (MBS subscription data) of the first receive end from the UDM. The MBS session subscription data includes the reference information of the first receive end, and the SMF may store the MBS session subscription data. When the first receive end requests to join the first MBS session, the SMF sends the reference information of the first receive end to the RAN by using the AMF. Correspondingly, the UDM obtains the reference information of the first receive end. Specifically, the UDM may obtain the reference information of the first receive end from the AF by using the NEF, or the UDM may obtain the reference information of the first receive end from a UDR.

It should be noted that the reference information of the first receive end may be implemented by adding a new field to the MBS subscription data. For example, the field is Reference info (reference information) in the MBS subscription data shown in Table 1. Specific content of the MBS subscription data is shown in Table 1. MBS allowed (MBS service allowed) indicates a multicast MBS service authorized by the UE, and MBS Session ID(s) (MBS session identifier(s)) indicates an MBS session that the UE is allowed to join. The MBS session identifier may include the identifier of the first MBS session. Reference info (reference information) may be specifically understood as reference information of the UE in each MBS session, and the reference information of the UE in each MBS session may include the reference information of the first receive end, that is, the reference information of the first receive end in the first MBS session. The reference information of the first receive end may include the identifier of the first MBS session, for example, the MBS session ID.

**Table 1**

| **Subscription data type (Subscription data type)** | **Field (Field)** | **Description (Description)** |
|---|---|---|
| MBS subscription data (MBS session subscription data) | MBS allowed (MBS service allowed) | Indicates whether the UE is authorized to use the multicast MBS service (Indicates whether the UE is authorized to use the multicast MBS service) |
| | MBS Session ID(s) (MBS session identifier(s)) | Identifies the MBS Session(s) that the UE is allowed to join (Identifier(s) of the MBS session(s) that the UE is allowed to join) |
| | Reference info (Reference information) | The Reference info of the UE in each MBS session (Reference information of the UE in each MBS session) |

In another implementation, the RAN may further determine, based on the reference information of the first receive end of the first MBS session, that the first receive end maintains in the RRC connected state. For how the RAN uses the reference information of the first receive end of the first MBS session, refer to the foregoing manner. For example, when the reference information of the first receive end includes the priority of the first receive end in the first MBS session, the priority of the first receive end is higher than the second preset priority, the priority of the first receive end is not the lowest in priorities of receive ends corresponding to the first MBS session of the access network device, or the priority of the first receive end is the highest in priorities of receive ends corresponding to the first MBS session of the access network device, in this case, the first receive end corresponding to the first MBS session is maintained in the RRC connected state. In addition, if the quantity of first receive ends of the first MBS session in the RAN is 3, the identifiers of the first receive ends are the UE 1, the UE 2, and the UE 3. If the RAN determines to maintain the first receive end (the UE 1) in the RRC connected state, the receive ends corresponding to the UE 2 and the UE 3 may be triggered to enter the idle state or the RRC inactive state.

In addition, the RAN may further determine whether to trigger the first receive end to enter the idle state or to enter the RRC inactive state. For example, the first receive end is UE. In a process of establishing an N2 connection for the UE, the RAN may receive RRC inactive assistance information (RRC inactive assistance information) from the AMF. The RRC inactive assistance information is used to assist the RAN in determining whether the UE can enter the RRC inactive state. Optionally, if the RAN receives the RRC inactive assistance information from the AMF or determines that context of the UE includes the RRC inactive assistance information, the RAN triggers the UE to enter the RRC inactive state, otherwise, the RAN triggers the UE to enter the idle state.

Optionally, if the RAN does not receive the RRC inactive assistance information from the AMF or determines that context of the UE does not include the RRC inactive assistance information, the RAN keeps the first receive end in the RRC connected state, in other words, the UE receives the service data of the first MBS session in the RRC connected state.

Optionally, the RAN receives, from the AMF, indication information indicating whether the UE is allowed to enter the RRC inactive state to receive data (for example, data of an MBS service) or whether the UE is capable of entering the RRC inactive state to receive data (for example, data of an MBS service). If the UE is allowed to enter the RRC inactive state to receive the data or the UE is capable of entering the RRC inactive state to receive the data, the RAN determines to trigger the UE to enter the RRC inactive state, otherwise, the RAN determines to trigger the UE to enter the idle state. The AMF may obtain, from the UDM or the SMF, the indication information indicating whether the UE is allowed to enter the RRC inactive state to receive the data. Alternatively, the AMF may obtain, from the UE, the indication information indicating whether the UE is capable of entering the RRC inactive state to receive the data.

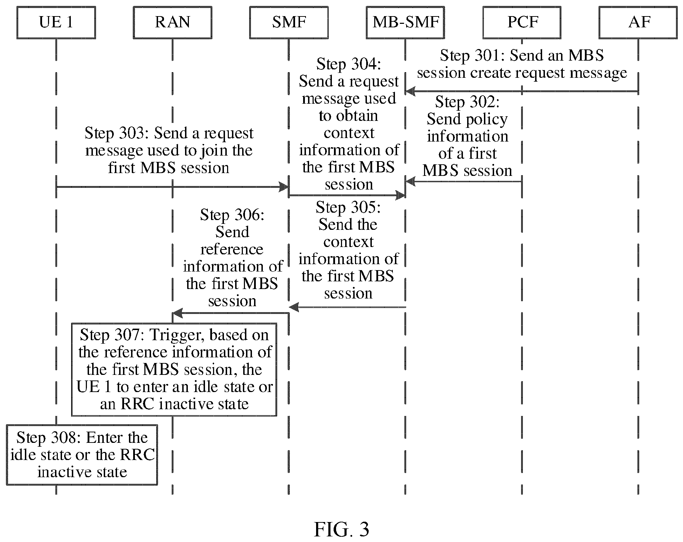

FIG. 3 shows another communication method. In the method, a RAN triggers, based on reference information of a first MBS session, a first receive end corresponding to the first MBS session to enter an idle state or an RRC inactive state. FIG. 3 is described by using an example in which the first receive end of the first MBS session is UE 1. FIG. 3 is a schematic diagram of interaction between the UE 1, the RAN, an SMF, an MB-SMF, a PCF, and an AF, and is described as follows.

Step 301: The AF sends an MBS session create request message to the MB-SMF.

The MBS session create request information may include the reference information of the first MBS session and an identifier of the first MBS session. The identifier of the first MBS session is used to identify the MBS session, for example, a temporary mobile group identifier (temporary mobile group identifier, TMGI).

Step 302: The PCF sends policy information of the first MBS session to the MB-SMF.

The policy information of the first MBS session includes the reference information of the first MBS session and the identifier of the first MBS session.

For the reference information of the first MBS session herein, refer to the foregoing descriptions of the reference information of the first MBS session. Details are not described herein again.

It should be noted that step 301 and step 302 are optional steps. For example, both step 301 and step 302 may be performed, and an execution sequence is not distinguished, or either step 301 and step 302 may be performed. This is not limited.

When both step 301 and step 302 are performed, the MB-SMF may determine the reference information of the first MBS session based on the MBS session create request message and QoS information of the first MBS session in the policy information of the first MBS session. For example, if the MB-SMF determines reference information 1 of the first MBS session based on the QoS information of the first MBS session in the MBS session create request message, the MB-SMF determines reference information 2 of the first MBS session based on the QoS information of the first MBS session in the policy information of the first MBS session, and the reference information 1 of the first MBS session is inconsistent with the reference information 2 of the first MBS session, the MB-SMF may use the reference information 2 of the first MBS session as the reference information of the first MBS session.

Step 303: The UE 1 sends, to the SMF, a request message used to request to join the first MBS session.

The request message carries the identifier of the first MBS session and indication information for joining the first MBS session. Specifically, the request message may be a session modification request message.

Specifically, the UE 1 may send, to the SMF by using an AMF, the request message used to request to join the first MBS session.

Step 304: The SMF sends, to the MB-SMF, a request message used to obtain context information of the first MBS session.

Specifically, the request message may be a context obtaining request message of the first MBS session.

Step 305: The MB-SMF sends the context information of the first MBS session to the SMF, where the context information of the first MBS session includes the reference information of the first MBS session. Correspondingly, the SMF may obtain the reference information of the first MBS session from the context information of the first MBS session.

Step 306: The SMF sends the reference information of the first MBS session to the RAN.

Specifically, in step 306, the reference information may be sent by using N2 info, or may be sent by using another message. This is not limited herein.

Step 307: The RAN triggers, based on the reference information of the first MBS session, the UE 1 to enter the idle state or the RRC inactive state.

Specifically, for step 307, refer to related descriptions of step 204 in FIG. 2. Triggering the UE 1 to enter the idle state or the RRC inactive state is not described herein again.

Optionally, based on the embodiment shown in FIG. 3, the foregoing step 307 may be replaced with: The RAN maintains, based on the reference information of the first MBS session, the UE 1 in an RRC connected state, in other words, the UE 1 receives service data of the first MBS session in the RRC connected state.

Specifically, for how the RAN maintains the first receive end in the RRC connected state, refer to related descriptions in step 204 in FIG. 2. For example, the access network device triggers, based on the reference information of the first MBS session, to maintain the UE 1 in the RRC connected state. Details are not described again.

Step 308: The UE 1 enters the idle state or the RRC inactive state.

Further, the UE 1 enters the idle state or the RRC inactive state, and receives the service data of the first MBS session in the idle state or the RRC inactive state.

The UE 1 may enter the idle state or the RRC inactive state based on the triggering of the RAN in step 307. For details, refer to the related descriptions above. Details are not described again.

By using the method provided in FIG. 3, the RAN may trigger, based on the reference information of the first MBS session, the first receive end corresponding to the first MBS session to enter the idle state or the RRC inactive state. This prevents the RAN from occupying, for a long period of time, processing resources that are used to maintain the receive end of the first MBS session to be in the RRC connected state, and may further save processing resources of the RAN.

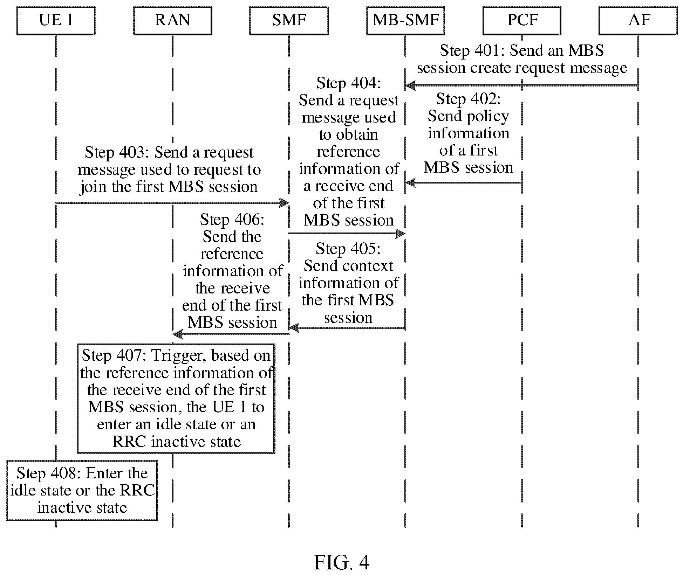

FIG. 4 shows another communication method. In the method, a RAN triggers, based on reference information of a receive end of a first MBS session, a receive end to enter an idle state or an RRC inactive state. For details, refer to FIG. 4. An example in which a first receive end is UE 1 is used in FIG. 4. FIG. 4 is a schematic diagram of interaction between the UE 1, the RAN, an SMF, an MB-SMF, a PCF, and an AF, and is described as follows.

Step 401: The AF sends an MBS session create request message to the MB-SMF.

The MBS session create request information may include the reference information of the receive end of the first MBS session and an identifier of the receive end of the first MBS session. The identifier of the receive end is used to identify the receive end, for example, a temporary mobile subscriber identity (temporary mobile subscriber identity, TMSI).

Step 402: The PCF sends policy information of the first MBS session to the MB-SMF.

The policy information of the first MBS session includes the reference information of the receive end of the first MBS session and the identifier of the receive end of the first MBS session.

Optionally, the SMF may further obtain the reference information of the receive end of the first MBS session from a UDM. The reference information may be provided by the AF for the UDM.

For the reference information of the receive end herein, refer to the foregoing descriptions of the reference information of the first receive end. Details are not described herein again.

It should be noted that step 401 and step 402 are optional steps. For example, both step 401 and step 402 may be performed, and an execution sequence is not distinguished, or either step 401 and step 402 may be performed. This is not limited.

Step 403: The UE 1 sends, to the SMF, a request message used to request to join the first MBS session.

The request message includes an identifier of the first MBS session and indication information for joining the first MBS session. Specifically, the request message may be a session modification request message.

Step 404: The SMF sends, to the MB-SMF, a request message used to obtain context information of the first MBS session.

The context information of the first MBS session includes the reference information of the receive end of the first MBS session.

The request message may be specifically a context request message of the first MBS session. The request message may carry the identifier of the receive end of the first MBS session, for example, an identifier of the UE 1, in this case, the MB-SMF may send reference information of the UE 1 to the SMF. If the request message does not carry the identifier of the receive end of the first MBS session, the MB-SMF sends reference information of all receive ends of the first MBS session to the SMF.

Step 405: The MB-SMF sends the context information of the first MBS session to the SMF, where the context information of the first MBS session includes the reference information of the receive end of the first MBS session. Correspondingly, the SMF may obtain the reference information of the receive end of the first MBS session from the context information of the first MBS session.

Step 406: The SMF sends the reference information of the receive end of the first MBS session to the RAN.

For example, the reference information may be sent by using N2 info, or may be sent by using another message. This is not limited herein.

Step 407: The RAN triggers, based on the reference information of the receive end of the first MBS session, the UE 1 to enter the idle state or the RRC inactive state.

Specifically, for step 407, refer to related descriptions of step 204 in FIG. 2. Triggering the UE 1 to enter the idle state or the RRC inactive state is not described herein again.

Optionally, based on the embodiment shown in FIG. 4, the foregoing step 407 may be alternatively replaced with that: The RAN determines, based on the reference information of the UE 1 of the first MBS session, that the UE 1 maintains in the RRC connected state. For details, refer to the foregoing descriptions. Details are not described herein again.

Step 408: The UE 1 enters the idle state or the RRC inactive state.

Specifically, the UE 1 enters the idle state or the RRC inactive state, and receives the service data of the first MBS session in the idle state or the RRC inactive state.

The UE 1 may enter the idle state or the RRC inactive state based on the triggering of the RAN in step 407. For details, refer to the related descriptions above. Details are not described again.

In this application, triggering, based on the receive end of the first MBS session, the first receive end to enter the idle state or the RRC inactive state can ensure that a high-priority receive end normally receives the service data of the first MBS session.

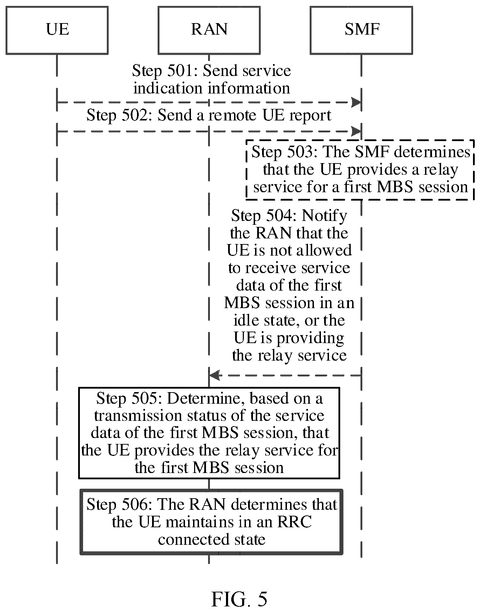

FIG. 5 shows another communication method according to this application. In this method, an example in which a first receive end is UE, and the UE provides a relay service for a first MBS session is used. FIG. 5 is a schematic diagram of interaction between the UE, a RAN, and an SMF, and is described as follows.

Step 501: The UE sends service indication information to the SMF.

The service indication information may be sent when the UE requests to join the first MBS session. For example, the service indication information is carried in a request message used to request to join the first MBS session. Alternatively, the service indication information may be sent by using another message or procedure. For example, the UE sends the service indication information to the SMF by using an MBS session modification procedure.

Specifically, the service indication information may indicate the UE to provide the relay service for the first MBS session.

That the UE provides a relay service for a first MBS session may mean that remote UE may receive service data of the first MBS session by using the UE.

Step 502: The UE sends a remote UE report (for example, a Remote UE Report) to the SMF.

The remote UE report may include a remote UE identifier (for example, a Remote User ID) and remote UE information (for example, Remote UE info), and the remote UE information may be address information that is allocated by the UE to the remote UE and that is used for network side communication.

It should be noted that step 501 and step 502 are optional steps. For example, both step 501 and step 502 may be performed, and an execution sequence is not distinguished, or either step 501 and step 502 may be performed. This is not limited.

Step 503: The SMF determines that the UE provides the relay service for the first MBS session.

Step 503 may be implemented in the following manners.

Manner 1: The SMF determines, based on the service indication information in step 501, that the UE provides the relay service for the first MBS session. For example, the service indication information is information indicating that the UE provides the relay service, and the SMF determines, based on the service indication information, that the UE provides the relay service for the first MBS session.

Manner 2: The SMF determines, based on the remote UE report in step 502, that the UE provides the relay service for the first MBS session. For example, the remote UE report includes the remote UE identifier and the remote UE information. The SMF determines, based on the remote UE report, that the UE provides the relay service for the first MBS session.

Step 504: The SMF notifies the RAN that the UE is not allowed to receive the service data of the first MBS session in the idle state, or the UE provides the relay service for the first MBS session.

In step 504, the SMF may notify the RAN by using N2 information. For example, the N2 information includes notification information or a notification message, to notify the RAN that the UE is not allowed to receive the service data of the first MBS session in the idle state, or the UE provides the relay service for the first MBS session.

Further, for a layer-3 relay scenario, steps 501 to 503 may be performed to determine that the UE provides the relay service for the service data of the first MBS session, and step 504 may be performed to notify the RAN. For a layer-2 relay scenario, steps 501 to 504 may not be performed. Instead, the RAN determines, by performing step 505, that the UE provides the relay service for the service data of the first MBS session. In FIG. 5, for the layer-2 relay scenario, the performed step is illustrated by using a solid line, for the layer-3 relay scenario, the performed steps are illustrated by using dotted lines, and for both the layer-2 relay scenario and the layer-3 relay scenario, the performed steps may be illustrated by using thick solid lines.

Step 505: The RAN determines, based on a transmission status of the service data of the first MBS session, that the UE provides the relay service for the first MBS session.

For the layer-2 relay scenario, the transmission status of the service data of the first MBS session may be understood as that the service data of the first MBS session is sent to the remote UE by using the UE. Specifically, the RAN sends the service data of the first MBS session to the remote UE by using the UE based on connection information between the remote UE and the UE. The connection information between the remote UE and the UE may be understood as connection information for the remote UE to access the RAN by using the UE, and the connection information may be determined through sending an RRC request message by the remote UE. Specifically, before step 505, the remote UE sends the RRC request message to the RAN by using the UE, and the RAN may know that the UE provides the relay service for the remote UE. The RAN knows that the UE provides the relay service for the remote UE, and transmits the service data of the first MBS session to the remote UE. Therefore, the RAN may know that the UE provides the relay service for the first MBS session.

Step 506: The RAN determines that the UE maintains in an RRC connected state.

Specifically, for the layer-3 relay, the RAN determines, based on the N2 information indicating that the UE is not allowed to receive the service data of the first MBS session in the idle state or the UE is providing the relay service, that the UE maintains in the RRC connected state. For the layer-2 relay, the RAN determines, based on step 505, that the UE provides the relay service for the first MBS session, and further determines that the UE maintains in the RRC connected state. In addition, for the layer-2 relay, the UE is still in the RRC connected state even after the RAN determines that all remote UE served by the UE has entered the idle state.

For example, if a quantity of first receive ends of the first MBS session in the RAN is 3, identifiers of the first receive ends are UE 1, UE 2, and UE 3, the UE 1 (as the layer-3 relay or the layer-2 relay) provides the relay service for the first MBS session, and the UE 2 and the UE 3 do not provide a relay service for the first MBS session, the RAN triggers receive ends corresponding to the UE 2 and the UE 3 to enter the idle state or an RRC inactive state, and maintains a receive end corresponding to the UE 1 in the RRC connected state to receive the service data of the first MBS session.

The embodiment described in FIG. 5 may be executed before step 204, step 307, and step 407 of the embodiments in FIG. 2 to FIG. 3. The embodiment shown in FIG. 5 may be understood as a further condition for determining that the RAN triggers the first receive end of the first MBS session to be in the idle state or the RRC inactive state, to trigger the first receive end of the first MBS session to enter a proper state, and ensure reliability of communication transmission.

According to the method, performance such as reliability of receiving an MBS session by relay UE may be preferentially ensured, so that the relay terminal can send correct service data of the MBS session to the remote UE. This prevents the relay UE from sending incorrect service data of the MBS session to the remote UE.

FIG. 6 shows another communication method. The method is applied to an establishment procedure of a shared tunnel. The shared tunnel is established between a RAN and a UPF, and is used to transmit data of a first MBS session. The UPF may be a multicast UPF. The RAN triggers, based on reference information of the first MBS session, a first receive end corresponding to the first MBS session to enter an idle state or an RRC inactive state. For details, refer to FIG. 6. An example in which the first receive end is UE 1 is used in FIG. 6. FIG. 6 is a schematic diagram of interaction between the UE 1, the RAN, an SMF, an AMF, an NRF, and an MB-SMF, and is described as follows.

Step 601: The UE 1 sends, to the SMF by using the AMF, a request message used to request to join the first MBS session.

The request message includes an identifier of the first MBS session and indication information for joining the first MBS session. Specifically, the request message may be a session modification request message, for example, a PDU session modification request.

Step 602: The SMF obtains, from the NRF, information about the MB-SMF that provides a service for the first MBS session.

The NRF may store a plurality of pieces of MB-SMF information, and the MB-SMF information may be an MB-SMF identifier, for example, a name, an ID, or an address. This is not limited.

Step 603: The SMF sends, to the MB-SMF, a request message used to obtain context information of the first MBS session.

The context information of the first MBS session includes the reference information of the first MBS session. For the reference information, refer to the related descriptions in the foregoing embodiments. Details are not described again.

The request message may be specifically a context request message of the first MBS session.

For example, the request message may carry an identifier of a receive end of the first MBS session, for example, an identifier of the UE 1, in this case, the MB-SMF may send reference information of the UE 1 to the SMF. If the request message does not carry the identifier of the receive end of the first MBS session, the MB-SMF sends reference information of all receive ends of the first MBS session to the SMF.

Step 604: The MB-SMF sends the context information of the first MBS session to the SMF.

The context information of the first MBS session may include the reference information of the receive end of the first MBS session.

Correspondingly, the SMF may obtain the reference information of the receive end of the first MBS session from the context information of the first MBS session.

Step 605: The SMF determines whether the UE 1 is authorized to use a first MBS service.

Specifically, step 605 may be replaced with that the SMF determines whether the UE 1 is authorized to receive the first MBS service. If the UE 1 is authorized to use the first MBS service, step 606 may be performed. If the UE 1 is not authorized to use the first MBS service, the SMF sends, by using the AMF, a response message indicating that the UE 1 is rejected from joining the first MBS session. This is not illustrated in FIG. 6.

The SMF may determine, based on subscription data of an MBS session stored by a UDM, whether the UE 1 is authorized to use the first MBS service. Information included in the subscription data of the MBS session may be shown in Table 1, that is, MBS allowed, MBS Session ID(s), and Reference info. The SMF may determine, based on the MBS allowed, whether the UE 1 is authorized to use the MBS service. When the UE 1 is authorized to use the MBS service, the SMF may learn, based on the MBS Session ID(s), an identifier of an MBS session to which the UE 1 is authorized to join. Usually, there may be a plurality of identifiers of the MBS session to which the UE 1 is authorized to join. If the identifiers of the MBS session include the identifier of the first MBS session, the SMF determines that the UE 1 is authorized to use the first MBS service.

It should be noted that step 602 to step 605 are optional steps.

Step 606: If receiving a request of the UE 1 to join the first MBS session, the SMF sends N2 session management information (N2 session management information, N2 SM info) to the AMF.

The N2 SM info message includes the identifier of the first MBS session, and the identifier of the first MBS session may be used by the RAN to determine the context information of the first MBS session.

Step 607. The AMF sends the N2 SM info to the RAN.

If a shared tunnel of the first MBS session is not established, the foregoing method may further include the following step 608 to step 611. The steps are used to establish the shared tunnel of the first MBS session.

In a procedure of establishing the shared tunnel of the first MBS session, the MB-SMF may send the reference information of the first MBS session to the RAN by using the AMF.

Step 608: The RAN sends an N2 MBS session request (N2 MBS session request) message to the AMF.

The N2 MBS session request message may include the identifier of the first MBS session and downlink tunnel information (DL tunnel Info) allocated by the RAN to the first MBS session. The DL tunnel Info may be understood as downlink tunnel information of the shared tunnel of the first MBS session.

Step 609: The AMF sends a context update request message of the first MBS session to the MB-SMF.

The context update request message of the first MBS session may include the identifier of the first MBS session and the foregoing DL tunnel Info.

Step 610: The MB-SMF sends a context update response message of the first MBS session to the AMF.

The context update response message of the first MBS session includes the reference information of the first MBS session. For details, refer to the foregoing related descriptions. Details are not described again.

Specifically, the context update response message of the first MBS session includes N2 SM info, and the N2 SM info may include the reference information of the first MBS session.

The MB-SMF may obtain the reference information of the first MBS session by referring to step 301 or step 302 in FIG. 3.

Step 611: The AMF sends the reference information of the first MBS session to the RAN.

Optionally, after the AMF receives the reference information of the first MBS session in step 610, the AMF first determines whether RRC inactive assistance information (RRC inactive assistance information) has been sent to the RAN. If the RRC inactive assistance information has been sent, the AMF sends the reference information of the first MBS session to the RAN. If the RRC inactive assistance information has not been sent, the AMF does not send the reference information of the first MBS session to the RAN. The RRC inactive assistance information is used to assist the RAN in determining whether the UE can enter the RRC inactive state.

Optionally, in step 609, the AMF may further send, to the MB-SMF, indication information indicating whether the AMF has sent the RRC inactive assistance information, and the MB-SMF determines, based on the indication information, whether to send the reference information of the first MBS session in step 610. If the indication information indicates that the AMF has sent the RRC inactive assistance information, the MB-SMF sends the reference information of the first MBS session to the AMF. If the indication information indicates that the AMF does not send the RRC inactive assistance information, the MB-SMF does not send the reference information of the first MBS session to the AMF. In other words, the UE 1 can enter the RRC inactive state only when the RAN obtains the RRC inactive assistance information. Therefore, when learning that the RAN has not obtained the RRC inactive assistance information, the AMF/MB-SMF does not need to send the reference information of the first MBS session.

Step 612: The RAN triggers, based on the reference information of the first MBS session, the UE 1 to enter the idle state or the RRC inactive state.

The triggering may be performed by sending a notification message to the UE 1, to enable the UE 1 to enter the idle state or the RRC inactive state.

Step 613: The UE 1 enters the idle state or the RRC inactive state.

Specifically, for step 612, refer to related descriptions of step 204 in FIG. 2. Triggering the UE 1 to enter the idle state or the RRC inactive state is not described herein again.

It should be noted that, in the establishment procedure of the shared tunnel, the MB-SMF sends the reference information of the first MBS session to the RAN by using the AMF. The reference information of the first MBS session needs to be sent only once, and the RAN stores only one piece of the reference information of the first MBS session. This avoids a case in which the SMF needs to send the reference information of the first MBS session to the RAN by using the AMF when each UE joins the first MBS session, to reduce signaling overheads. In addition, in the example in FIG. 6, the RAN does not need to store the reference information of the first MBS session in context of each UE that joins the first MBS session. This reduces storage space occupied by the RAN.

In this application, after the shared tunnel of the first MBS session is established, triggering, based on the reference information of the first MBS session, the first receive end to enter the idle state or the RRC inactive state can ensure that a high-priority receive end normally receives service data of the first MBS session. The service data of the first MBS session is transmitted by using the shared tunnel. This saves transmission resources.

The foregoing mainly describes the solutions provided in embodiments of this application from a perspective of device interaction. It may be understood that to implement the foregoing functions, each device may include a corresponding hardware structure and/or software module for implementing each function. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional unit division may be performed on the device based on the foregoing method examples. For example, each functional unit may be obtained through division based on a corresponding function, or two or more functions may be integrated into one unit. The integrated unit may be implemented in a form of hardware, or may be implemented in a form of a software functional unit.

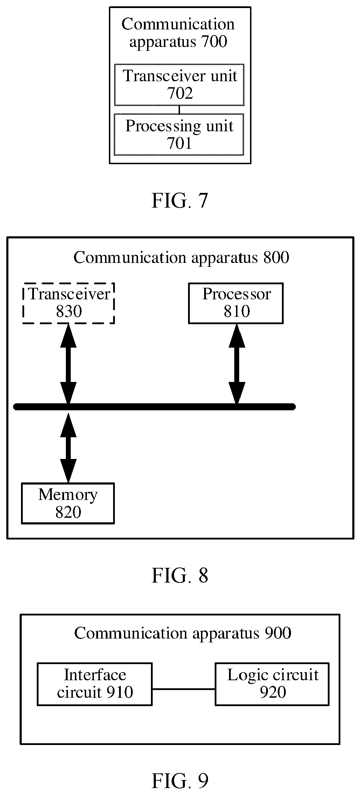

When an integrated unit is used, FIG. 7 is a block diagram of a possible example of a communication apparatus according to an embodiment of this application. As shown in FIG. 7, a communication apparatus 700 may include a processing unit 701 and a transceiver unit 702. The processing unit 701 is configured to: control and manage an action of the communication apparatus 700. The transceiver unit 702 is configured to support communication between the communication apparatus 700 and another device. Optionally, the transceiver unit 702 may include a receiving unit and/or a sending unit, respectively configured to perform a receiving operation and a sending operation. Optionally, the communication apparatus 700 may further include a storage unit, configured to store program code and/or data of the communication apparatus 700. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, or may be referred to as an interface, a communication interface, an interface circuit, or the like. The processing unit may be a processor, a processing circuit, a logic circuit, or the like. Specifically, the apparatus may be the foregoing access network device, the multicast/broadcast session management network element, the session management network element, or the like.

In an embodiment, the transceiver unit 702 may be configured to receive reference information of a first MBS session from a session management network element or an access and mobility management network element. The reference information of the first MBS session indicates a feature of the first MBS session. The processing unit 701 may be configured to trigger, based on the reference information of the first MBS session, a first receive end corresponding to the first MBS session to enter an idle state or a radio resource control RRC inactive state.

In an optional manner, the reference information of the first MBS session includes one or more of the following: a priority of the first MBS session, a reliability requirement of the first MBS session, latency of the first MBS session, an ARP of the first MBS session, first indication information indicating that a receive end in the idle state or the RRC inactive state is allowed to receive service data of the first MBS session, and second indication information indicating that a QoS requirement of the first MBS session is allowed not to be met. The reliability requirement of the first MBS session is a highest reliability requirement in reliability requirements of 5QIs of QoS flows of the first MBS session; the latency of the first MBS session is lowest latency in latency of the 5QIs of the QoS flows of the first MBS session; and the ARP of the first MBS session is a lowest ARP in ARPs of the QoS flows of the first MBS session.

In an optional manner, when the reference information of the first MBS session includes the priority of the first MBS, the processing unit 701 is specifically configured to perform the following operation.

If the priority of the first MBS session is lower than a first preset priority, the first receive end corresponding to the first MBS session is triggered to enter the idle state or the RRC inactive state. Alternatively, if the priority of the first MBS session is a lowest priority in priorities of all MBS sessions of the access network device, the first receive end corresponding to the first MBS session is triggered to enter the idle state or the RRC inactive state.

In an optional manner, when the reference information of the first MBS session includes the reliability requirement of the first MBS session, the processing unit 701 is specifically configured to perform the following operation.

If the reliability requirement of the first MBS session is lower than a first threshold, the first receive end corresponding to the first MBS session is triggered to enter the idle state or the RRC inactive state. Alternatively, if the reliability requirement of the first MBS session is a lowest reliability requirement in reliability requirements of all MBS sessions of the access network device, the first receive end corresponding to the first MBS session is triggered to enter the idle state or the RRC inactive state.

In an optional manner, when the reference information of the first MBS session includes the latency of the first MBS session, the processing unit 701 is specifically configured to perform the following operation.

If the latency of the first MBS session is greater than that of a second threshold, the first receive end corresponding to the first MBS session is triggered to enter the idle state or the RRC inactive state. Alternatively, if the latency of the first MBS session is highest latency in latency of all MBS sessions of the access network device, the first receive end corresponding to the first MBS session is triggered to enter the idle state or the RRC inactive state.

In an optional manner, when the reference information of the first MBS session includes the ARP of the first MBS session, the processing unit 701 is specifically configured to perform the following operation.

If the ARP of the first MBS session is greater than a third threshold, the first receive end corresponding to the first MBS session is triggered to enter the idle state or the RRC inactive state. Alternatively, if the ARP of the first MBS session is a highest ARP in ARPs of all MBSs of the access network device, the first receive end corresponding to the first MBS session is triggered to enter the idle state or the RRC inactive state.

In an optional manner, the first receive end is one or more of receive ends corresponding to the first MBS session.

In an optional manner, the processing unit 701 is specifically configured to determine that no service data other than the service data of the first MBS session is transmitted on the first receive end.

In an optional manner, the transceiver unit 702 is further configured to receive the reference information of the first receive end from the session management network element or a unified data management network element. The reference information of the first receive end includes one or more of the following: a priority of the first receive end in the first MBS session, and third indication information indicating that the first receive end is allowed to receive the service data of the first MBS session in the idle state or the RRC inactive state. The processing unit 701 is further configured to trigger, based on the reference information of the first receive end, the first receive end to enter the idle state or the RRC inactive state.

In an optional manner, when the reference information of the first receive end includes the priority of the first receive end in the first MBS session, the processing unit 701 is further configured to perform the following operation.

If the priority of the first receive end in the first MBS session is lower than a second preset priority, the first receive end is triggered to enter the idle state or the RRC inactive state. Alternatively, if the priority of the first receive end in the first MBS session is a lowest priority in priorities of all receive ends corresponding to the first MBS session, the first receive end is triggered to enter the idle state or the RRC inactive state.

In an optional manner, before that the processing unit 701 is configured to trigger, based on the reference information of the first MBS session, a first receive end corresponding to the first MBS session to enter an idle state or an RRC inactive state, the processing unit 701 is further configured to determine that a quantity of terminals that are in an RRC connected state and that receive service data of an MBS session is greater than a preset value; or the access network device determines that a quantity of terminals in an RRC connected state is greater than a preset value.

In an optional manner, before the first receive end corresponding to the first MBS session is triggered, based on the reference information of the first MBS session, to enter the idle state or the RRC inactive state, the processing unit 701 is further configured to determine that fourth indication information is not received. The fourth indication information indicates that the first receive end is not allowed to receive the service data of the first MBS session in the idle state or the RRC inactive state, or indicates that the first receive end provides a relay service for the first MBS session.

In an embodiment, the processing unit 701 may be configured to obtain the reference information of the first MBS session. The reference information of the first MBS session indicates the feature of the first MBS session. The transceiver unit 702 may be configured to send the reference information of the first MBS session to the session management network element or the access and mobility management network element.

In an optional manner, the reference information of the first MBS session includes one or more of the following: the priority of the first MBS session, the reliability requirement of the first MBS session, the latency of the first MBS session, the ARP of the first MBS session, the first indication information indicating that the receive end in the idle state or the RRC inactive state is allowed to receive the service data of the first MBS session, and the second indication information indicating that QoS of the first MBS session is allowed not to be met. The reliability requirement of the first MBS session is the highest reliability requirement in reliability requirements of the 5QIs of the QoS flows of the first MBS session; the latency of the first MBS session is the lowest latency in latency of the 5QIs of the QoS flows of the first MBS session; and the ARP of the first MBS session is the lowest ARP in ARPs of the QoS flows of the first MBS session.

In an optional manner, the transceiver unit 702 is further configured to: receive an MBS session create request, where the MBS session create request includes the reference information of the first MBS session; receive policy information of the first MBS session from a policy management network element, where the policy information of the first MBS session includes the reference information of the first MBS session; or receive QoS information of the first MBS session from an application function or a policy management network element, to enable the processing unit 701 to determine the reference information of the first MBS session based on the QoS information of the first MBS session.

In an optional manner, the MBS session create request carries the reference information of the first receive end, or the policy information of the first MBS session includes the reference information of the first receive end. The first receive end is one or more of the receive ends corresponding to the first MBS session.

In an optional manner, the reference information of the first receive end includes one or more of the following: the priority of the first receive end in the first MBS session, and the third indication information indicating that the first receive end is allowed to receive the service data of the first MBS session in the idle state or the RRC inactive state.

In an optional manner, the transceiver unit 702 is further configured to receive identification information of the first receive end from the session management network element. The processing unit 701 is further configured to send the reference information of the first receive end to the session management network element based on the identification information.

In an embodiment, the transceiver unit 702 may be configured to receive the reference information of the first receive end of the first MBS session from the session management network element. The reference information of the first receive end indicates a feature of the first receive end. The processing unit 701 may be configured to trigger, based on the reference information of the first receive end, the first receive end to enter the idle state or the radio resource control RRC inactive state.

In an optional manner, the reference information of the first receive end includes one or more of the following: the priority of the first receive end in the first MBS session, and the third indication information indicating that the first receive end is allowed to receive the service data of the first MBS session in the idle state or the RRC inactive state.

In an optional manner, when the reference information of the first receive end includes the priority of the first receive end in the first MBS session, the processing unit 701 is further configured to perform the following operation.

If the priority of the first receive end in the first MBS session is lower than the second preset priority, the first receive end is triggered to enter the idle state or the RRC inactive state. Alternatively, if the priority of the first receive end in the first MBS session is the lowest priority in priorities of all receive ends corresponding to the first MBS session, the first receive end is triggered to enter the idle state or the RRC inactive state.

In an optional manner, before the processing unit 701 triggers a first receive end to enter an idle state or an RRC inactive state, the processing unit 701 is further configured to determine that no service data other than the service data of the first MBS session is transmitted on the first receive end.

In an optional manner, before the processing unit 701 triggers, based on the reference information of the first receive end, the first receive end to enter an idle state or a radio resource control RRC inactive state, the processing unit 701 is further configured to: determine that the quantity of terminals that are in the RRC connected state and that receive the service data of the MBS session is greater than the preset value; or determine that the quantity of terminals in the RRC connected state is greater than the preset value.

In an embodiment, the processing unit 701 may be configured to obtain the reference information of the first receive end of the first MBS session. The reference information of the first receive end indicates the feature of the first receive end. The transceiver unit 702 is configured to send the reference information of the first receive end of the first MBS session to the session management network element.

In an optional manner, the reference information of the first receive end includes one or more of the following: the priority of the first receive end in the first MBS session, and the third indication information indicating that the first receive end is allowed to receive the service data of the first MBS session in the idle state or the RRC inactive state.

In an optional manner, the transceiver unit 702 is further configured to: receive the MBS session create request, where the MBS session create request includes the reference information of the first receive end of the first MBS session; or receive the policy information of the first MBS session from the policy management network element, where the policy information of the first MBS session includes the reference information of the first receive end of the first MBS session.

In an optional manner, the transceiver unit 702 is further configured to receive the identification information of the first receive end from the session management network element. The processing unit 701 is further configured to send the reference information of the first receive end to the session management network element based on the identification information.

As shown in FIG. 8, this application further provides a communication apparatus 800. The communication apparatus 800 may be a chip or a chip system. The communication apparatus may be located in a device in any one of the foregoing method embodiments, for example, the access network device or the SMF, to perform an action corresponding to the device.

Optionally, the chip system may include a chip, or may include a chip and another discrete component.

The communication apparatus 800 includes a processor 810.

The processor 810 is configured to execute a computer program stored in a memory 820, to implement actions of each device in any one of the foregoing method embodiments.

The communication apparatus 800 may further include the memory 820, configured to store a computer program.

Optionally, the memory 820 is coupled to the processor 810. A coupling is an indirect coupling or a communication connection between apparatuses, units, or modules, may be in an electrical form, a mechanical form, or in another form, and is used for information exchange between the apparatuses, the units, or the modules. Optionally, the memory 820 is integrated with the processor 810.

There may be one or more processors 810 and one or more memories 820. This is not limited.

Optionally, in actual application, the communication apparatus 800 may include a transceiver 830, or may not include a transceiver 830. In the figure, a dashed-line box is used as an example. The communication apparatus 800 may exchange information with another device by using the transceiver 830. The transceiver 830 may be a circuit, a bus, a transceiver, or any other apparatus that may be configured to exchange information.

In a possible implementation, the communication apparatus 800 may be the access network device, the session management network element, or the multicast/broadcast session management network element in the foregoing method embodiments.

In this embodiment of this application, a specific connection medium between the transceiver 830, the processor 810, and the memory 820 is not limited. In this embodiment of this application, in FIG. 8, the memory 820, the processor 810, and the transceiver 830 are connected to each other by using a bus. The bus is represented by using a thick line in FIG. 8. A manner of connection between other components is only schematically described, but is not used as a limitation. The bus may be classified into an address bus, a data bus, a control bus, and the like. For ease of representation, only one thick line is for representing the bus in FIG. 8, but this does not mean that there is only one bus or only one type of bus. In this embodiment of this application, the processor may be a general-purpose processor, a digital signal processor, an applicationspecific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a nonvolatile memory, for example, a hard disk drive (hard disk drive, HDD) or a solid-state drive (solid-state drive, SSD), or may be a volatile memory (volatile memory), for example, a random-access memory (random-access memory, RAM). The memory may alternatively be any other medium that can be configured to carry or store expected program code in a form of instructions or a data structure and that can be accessed by a computer. This is not limited thereto. The memory in embodiments of this application may alternatively be a circuit or any other apparatus that can implement a storage function, and is configured to store the computer program, program instructions, and/or data.

Based on the foregoing embodiments, refer to FIG. 9. An embodiment of this application further provides another communication apparatus 900, including an interface circuit 910 and a logic circuit 920. The interface circuit 910 may be understood as an input/output interface, and may be configured to perform the sending and receiving steps of each device in any one of the foregoing method embodiments, for example, the sending step in step 203 in which the SMF sends the reference information of the first MBS session to the RAN. The logic circuit 920 may be configured to run code or instructions to perform the method performed by each device in any one of the foregoing embodiments. Details are not described again.

Based on the foregoing embodiments, this embodiment of this application further provides a computer-readable storage medium. The computer-readable storage medium stores instructions. When the instructions are executed, the method performed by each device in any one of the foregoing method embodiments is enabled to be implemented. For example, the method performed by the RAN, the MB-SMF, or the SMF in the embodiment shown in FIG. 2 is enabled to be implemented. The computer-readable storage medium may include any medium that can store program code, such as a USB flash drive, a removable hard disk drive, a read-only memory, a random access memory, a magnetic disk, or an optical disc.

Based on the foregoing embodiments, this embodiment of this application provides a communication system. The communication system includes the access network device (for example, the RAN), the session management network element (for example, the SMF), and the multicast/broadcast session management network element (for example, the MB-SMF) mentioned in any one of the foregoing method embodiments. The communication system may be configured to perform the method performed by each device in any one of the foregoing method embodiments.

In addition, the communication system may further include a terminal device (for example, UE or a first receive end). The terminal device may exchange data with the access network device and the session management network element, to perform the related method in any one of the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the apparatus (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided to a general-purpose computer, a dedicated computer, an embedded processor, or a processor of another programmable data processing apparatus to generate a machine, so that the instructions executed by the computer or the processor of the another programmable data processing apparatus generate an apparatus for implementing a function specified in one or more processes in the flowcharts and/or in one or more blocks in the block diagrams.

These computer program instructions may be alternatively stored in a computer-readable memory that can indicate a computer or another programmable data processing apparatus to work in a specific manner, so that the instructions stored in the computer-readable memory generate an artifact that includes an instruction apparatus. The instruction apparatus implements a function specified in one or more processes in the flowcharts and/or in one or more blocks in the block diagrams.

These computer program instructions may be alternatively loaded onto a computer or another programmable data processing apparatus, so that a series of operations and steps are performed on the computer or the another programmable apparatus, to generate computerimplemented processing. Therefore, the instructions executed on the computer or the another programmable apparatus provide steps for implementing a function specified in one or more processes in the flowcharts and/or in one or more blocks in the block diagrams.

## Claims

1. A communication method comprising:
receiving (S203, S306, S406, S611), by an access network device or a chip disposed inside an access network device, reference information of a first multicast/broadcast service, MBS, session from an access and mobility management network element; and
triggering (S204, S307, S407, S612), by the access network device or the chip disposed inside the access network device based on the reference information of the first MBS session, a first receive end corresponding to the first MBS session to enter a radio resource control, RRC, inactive state,
and **characterised in that** the reference information of the first MBS session comprises one or more of the following: a reliability requirement of the first MBS session, an allocation and retention priority, ARP, of the first MBS session, wherein
the reliability requirement of the first MBS session is a highest reliability requirement in reliability requirements of fifth generation, 5G, quality of service, QoS, identifiers, 5QIs, of the QoS flows of the first MBS session; and the ARP of the first MBS session is a lowest ARP in ARPs of the QoS flows of the first MBS session.

2. The method according to claim 1, wherein when the reference information of the first MBS session comprises the reliability requirement of the first MBS session, the triggering, by the access network device or the chip disposed inside the access network device based on the reference information of the first MBS session, a first receive end corresponding to the first MBS session to enter an RRC inactive state comprises:
if the reliability requirement of the first MBS session is lower than a first threshold, triggering, by the access network device or the chip disposed inside the access network device, the first receive end corresponding to the first MBS session to enter the RRC inactive state; or
if the reliability requirement of the first MBS session is a lowest reliability requirement in reliability requirements of all MBS sessions of the access network device or the chip disposed inside the access network device, triggering, by the access network device or the chip disposed inside the access network device, the first receive end corresponding to the first MBS session to enter the RRC inactive state.

3. The method according to claim 1, wherein when the reference information of the first MBS session comprises the ARP of the first MBS session, the triggering, by the access network device or the chip disposed inside the access network device based on the reference information of the first MBS session, a first receive end corresponding to the first MBS session to enter an RRC inactive state comprises:
if the ARP of the first MBS session is greater than a third threshold, triggering, by the access network device or the chip disposed inside the access network device, the first receive end corresponding to the first MBS session to enter the RRC inactive state; or
if the ARP of the first MBS session is a highest ARP in ARPs of all MBS sessions of the access network device or the chip disposed inside the access network device, triggering, by the access network device or the chip disposed inside the access network device, the first receive end corresponding to the first MBS session to enter the RRC inactive state.

4. The method according to any one of claims 1 to 3, wherein the first receive end is one or more of receive ends corresponding to the first MBS session.

5. The method according to any one of claims 1 to 4, wherein before the triggering a first receive end corresponding to the first MBS session to enter an RRC inactive state, the method further comprises:
determining, by the access network device or the chip disposed inside the access network device, that no service data other than the service data of the first MBS session is transmitted on the first receive end.

6. The method according to claim 4 or 5, wherein the method further comprises:
receiving, by the access network device or the chip disposed inside the access network device, reference information of the first receive end from the session management network element, wherein the reference information of the first receive end comprises one or more of the following: a priority of the first receive end in the first MBS session, and third indication information indicating that the first receive end is allowed to receive the service data of the first MBS session in the RRC inactive state; and
the triggering a first receive end corresponding to the first MBS session to enter a radio resource control RRC inactive state comprises:
triggering, by the access network device or the chip disposed inside the access network device based on the reference information of the first receive end, the first receive end to enter the RRC inactive state.

7. The method according to claim 6, wherein when the reference information of the first receive end comprises the priority of the first receive end in the first MBS session, the triggering, by the access network device or the chip disposed inside the access network device based on the reference information of the first receive end, the first receive end to enter the RRC inactive state comprises:
if the priority of the first receive end in the first MBS session is lower than a second preset priority, triggering, by the access network device or the chip disposed inside the access network device, the first receive end to enter the RRC inactive state; or
if the priority of the first receive end in the first MBS session is a lowest priority in priorities of all receive ends corresponding to the first MBS session, triggering, by the access network device or the chip disposed inside the access network device, the first receive end to enter the RRC inactive state.

8. The method according to any one of claims 1 to 7, wherein before the triggering, by the access network device or the chip disposed inside the access network device based on the reference information of the first MBS session, a first receive end corresponding to the first MBS session to enter an RRC inactive state, the method further comprises:
determining, by the access network device or the chip disposed inside the access network device, that a quantity of terminals that are in an RRC connected state and that receive service data of an MBS session is greater than a preset value; or
determining, by the access network device or the chip disposed inside the access network device, that a quantity of terminals in an RRC connected state is greater than a preset value.

9. The method according to any one of claims 1 to 8, wherein before the triggering, by the access network device or the chip disposed inside the access network device based on the reference information of the first MBS session, a first receive end corresponding to the first MBS session to enter an RRC inactive state, the method further comprises:
receiving, by the access network device or the chip disposed inside the access network device, no fourth indication information, wherein the fourth indication information indicates that the first receive end is not allowed to receive the service data of the first MBS session in the RRC inactive state, or indicates that the first receive end provides a relay service for the first MBS session.

10. A communication apparatus, wherein the communication apparatus is configured to perform the method according to any one of claims 1 to 9.

11. The communication apparatus of claim 10 integrated into a chip system, wherein the chip system comprises a processing circuit, wherein the processing circuit is coupled to a storage medium; and
the processing circuit is configured to execute some or all computer programs or instructions in the storage medium, and when the some or all computer programs or instructions are executed, the method according to any one of claims 1 to 9 is performed.

12. A computer-readable storage medium, wherein the computer-readable storage medium stores instructions, and when the instructions are executed by a computer, the method according to any one of claims 1 to 9 is performed.

13. A computer program product comprising a computer program or instructions, wherein when the computer program product is run on a computer, the method according to any one of claims 1 to 9 is performed.

14. A communication system, comprising: an access network device, an access and mobility management network element, and a multicast/broadcast session management network element, wherein
the access network device comprises the communication apparatus of claim 10; and
the access and mobility management network element is configured to receive the reference information of the first MBS session from the multicast/broadcast session management network element, and send the reference information of the first MBS session to the access network device.

15. The communication method of claim 1 further comprising the steps of:
obtaining (S201), by a multicast/broadcast session management network element, reference information of a first multicast/broadcast service, MBS, session, wherein the reference information of the first MBS session indicates a feature of the first MBS session;
sending (S202), by the multicast/broadcast session management network element, the reference information of the first MBS session to an access and mobility management network element;
receiving (S202), by the access and mobility management network element, the reference information of the first MBS session;
sending (S203), by the access and mobility management network element, the reference information of the first MBS session to an access network device or a chip disposed inside an access network device;

## Patentansprüche

1. Kommunikationsverfahren, das Folgendes umfasst:
Empfangen (S203, S306, S406, S611), durch eine Zugangsnetzvorrichtung oder einen in einer Zugangsnetzvorrichtung angeordneten Chip, von Referenzinformationen einer ersten Multicast/Broadcast-Dienst- bzw. MBS-Sitzung von einem Zugangs- und Mobilitätsverwaltungsnetzelement; und
Triggern (S204, S307, S407, S612), durch die Zugangsnetzvorrichtung oder den in der Zugangsnetzvorrichtung angeordneten Chip basierend auf den Referenzinformationen der ersten MBS-Sitzung, eines ersten Empfangsendes, das der ersten MBS-Sitzung entspricht, zum Eintreten in einen Funkressourcensteuerung- bzw. RRC-inaktiv-Zustand,
und **dadurch gekennzeichnet, dass** die Referenzinformationen der ersten MBS-Sitzung eines oder mehrere der Folgenden umfassen: eine Zuverlässigkeitsanforderung der ersten MBS-Sitzung, eine Zuteilungs- und Bewahrungspriorität bzw. ARP der ersten MBS-Sitzung, wobei
die Zuverlässigkeitsanforderung der ersten MBS-Sitzung eine höchste Zuverlässigkeitsanforderung in Zuverlässigkeitsanforderungen von "Fifth-Generation"- bzw. 5G-Dienstgüte- bzw. -QoS-Kennungen bzw. 5QIs der QoS-Flüsse der ersten MBS-Sitzung ist; und die ARP der ersten MBS-Sitzung eine niedrigste ARP in ARPs der QoS-Flüsse der ersten MBS-Sitzung ist.

2. Verfahren nach Anspruch 1, wobei, wenn die Referenzinformationen der ersten MBS-Sitzung die Zuverlässigkeitsanforderung der ersten MBS-Sitzung umfassen, das Triggern, durch die Zugangsnetzvorrichtung oder den in der Zugangsnetzvorrichtung angeordneten Chip basierend auf den Referenzinformationen der ersten MBS-Sitzung, eines ersten Empfangsendes, das der ersten MBS-Sitzung entspricht, zum Eintreten in einen RRC-inaktiv-Zustand, Folgendes umfasst:
wenn die Zuverlässigkeitsanforderung der ersten MBS-Sitzung niedriger als eine erste Schwelle ist, Triggern, durch die Zugangsnetzvorrichtung oder den in der Zugangsnetzvorrichtung angeordneten Chip, des ersten Empfangsendes, das der ersten MBS-Sitzung entspricht, zum Eintreten in den RRC-inaktiv-Zustand; oder
wenn die Zuverlässigkeitsanforderung der ersten MBS-Sitzung eine niedrigste Zuverlässigkeitsanforderung in Zuverlässigkeitsanforderungen aller MBS-Sitzungen der Zugangsnetzvorrichtung oder des in der Zugangsnetzvorrichtung angeordneten Chips ist, Triggern, durch die Zugangsnetzvorrichtung oder den in der Zugangsnetzvorrichtung angeordneten Chip, des ersten Empfangsendes, das der ersten MBS-Sitzung entspricht, zum Eintreten in den RRC-inaktiv-Zustand.

3. Verfahren nach Anspruch 1, wobei, wenn die Referenzinformationen der ersten MBS-Sitzung die ARP der ersten MBS-Sitzung umfassen, das Triggern, durch die Zugangsnetzvorrichtung oder den in der Zugangsnetzvorrichtung angeordneten Chip basierend auf den Referenzinformationen der ersten MBS-Sitzung, eines ersten Empfangsendes, das der ersten MBS-Sitzung entspricht, zum Eintreten in einen RRC-inaktiv-Zustand, Folgendes umfasst:
wenn die ARP der ersten MBS-Sitzung höher als eine dritte Schwelle ist, Triggern, durch die Zugangsnetzvorrichtung oder den in der Zugangsnetzvorrichtung angeordneten Chip, des ersten Empfangsendes, das der ersten MBS-Sitzung entspricht, zum Eintreten in den RRC-inaktiv-Zustand; oder
wenn die ARP der ersten MBS-Sitzung eine höchste ARP in ARPs aller MBS-Sitzungen der Zugangsnetzvorrichtung oder des in der Zugangsnetzvorrichtung angeordneten Chips ist, Triggern, durch die Zugangsnetzvorrichtung oder den in der Zugangsnetzvorrichtung angeordneten Chip, des ersten Empfangsendes, das der ersten MBS-Sitzung entspricht, zum Eintreten in den RRC-inaktiv-Zustand.

4. Verfahren nach einem der Ansprüche 1 bis 3, wobei das erste Empfangsende eines oder mehrere von Empfangsenden ist, die der ersten MBS-Sitzung entsprechen.

5. Verfahren nach einem der Ansprüche 1 bis 4, wobei das Verfahren vor dem Triggern eines ersten Empfangsendes, das der ersten MBS-Sitzung entspricht, zum Eintreten in einen RRC-inaktiv-Zustand, ferner Folgendes umfasst:
Bestimmen, durch die Zugangsnetzvorrichtung oder den in der Zugangsnetzvorrichtung angeordneten Chip, dass keine anderen Dienstdaten als die Dienstdaten der ersten MBS-Sitzung an dem ersten Empfangsende übertragen werden.

6. Verfahren nach Anspruch 4 oder 5, wobei das Verfahren ferner Folgendes umfasst:
Empfangen, durch die Zugangsnetzvorrichtung oder den in der Zugangsnetzvorrichtung angeordneten Chip, von Referenzinformationen des ersten Empfangsendes von dem Sitzungsverwaltungsnetzelement, wobei die Referenzinformationen des ersten Empfangsendes eines oder mehrere der Folgenden umfassen: eine Priorität des ersten Empfangsendes in der ersten MBS-Sitzung und dritte Angabeinformationen, die angeben, dass dem ersten Empfangsende der Empfang der Dienstdaten der ersten MBS-Sitzung in dem RRC-inaktiv-Zustand gestattet ist; und
wobei das Triggern eines ersten Empfangsendes, das der ersten MBS-Sitzung entspricht, zum Eintreten in einen Funkressourcensteuerung- bzw. RRC-inaktiv-Zustand Folgendes umfasst:
Triggern, durch die Zugangsnetzvorrichtung oder den in der Zugangsnetzvorrichtung angeordneten Chip basierend auf den Referenzinformationen des ersten Empfangsendes, des ersten Empfangsendes, zum Eintreten in den RRC-inaktiv-Zustand.

7. Verfahren nach Anspruch 6, wobei, wenn die Referenzinformationen des ersten Empfangsendes die Priorität des ersten Empfangsendes in der ersten MBS-Sitzung umfassen, das Triggern, durch die Zugangsnetzvorrichtung oder den in der Zugangsnetzvorrichtung angeordneten Chip basierend auf den Referenzinformationen des ersten Empfangsendes, des ersten Empfangsendes zum Eintreten in den RRC-inaktiv-Zustand Folgendes umfasst:
wenn die Priorität des ersten Empfangsendes in der ersten MBS-Sitzung niedriger als eine zweite voreingestellte Priorität ist, Triggern, durch die Zugangsnetzvorrichtung oder den in der Zugangsnetzvorrichtung angeordneten Chip, des ersten Empfangsendes zum Eintreten in den RRC-inaktiv-Zustand; oder
wenn die Priorität des ersten Empfangsendes in der ersten MBS-Sitzung eine niedrigste Priorität in Prioritäten aller Empfangsenden ist, die der ersten MBS-Sitzung entsprechen, Triggern, durch die Zugangsnetzvorrichtung oder den in der Zugangsnetzvorrichtung angeordneten Chip, des ersten Empfangsendes zum Eintreten in den RRC-inaktiv-Zustand.

8. Verfahren nach einem der Ansprüche 1 bis 7, wobei das Verfahren vor dem Triggern, durch die Zugangsnetzvorrichtung oder den in der Zugangsnetzvorrichtung angeordneten Chip basierend auf den Referenzinformationen der ersten MBS-Sitzung, eines ersten Empfangsendes, das der ersten MBS-Sitzung entspricht, zum Eintreten in einen RRC-inaktiv-Zustand, ferner Folgendes umfasst:
Bestimmen, durch die Zugangsnetzvorrichtung oder den in der Zugangsnetzvorrichtung angeordneten Chip, dass eine Anzahl von Endgeräten, die sich in einem RRCverbunden-Zustand befinden und die Dienstdaten einer MBS-Sitzung empfangen, größer als ein voreingestellter Wert ist; oder
Bestimmen, durch die Zugangsnetzvorrichtung oder den in der Zugangsnetzvorrichtung angeordneten Chip, dass eine Anzahl von Endgeräten in einem RRC-verbunden-Zustand größer als ein vorbestimmter Wert ist.

9. Verfahren nach einem der Ansprüche 1 bis 8, wobei das Verfahren vor dem Triggern, durch die Zugangsnetzvorrichtung oder den in der Zugangsnetzvorrichtung angeordneten Chip basierend auf den Referenzinformationen der ersten MBS-Sitzung, eines ersten Empfangsendes, das der ersten MBS-Sitzung entspricht, zum Eintreten in einen RRC-inaktiv-Zustand, ferner Folgendes umfasst:
Empfangen, durch die Zugangsnetzvorrichtung oder den in der Zugangsnetzvorrichtung angeordneten Chip, keiner vierten Angabeinformationen, wobei die vierten Angabeinformationen angeben, dass dem ersten Empfangsende der Empfang der Dienstdaten der ersten MBS-Sitzung in dem RRC-inaktiv-Zustand nicht gestattet ist, oder angeben, dass das erste Empfangsende einen Relaisdienst für die erste MBS-Sitzung bereitstellt.

10. Kommunikationseinrichtung, wobei die Kommunikationseinrichtung dazu ausgelegt ist, das Verfahren nach einem der Ansprüche 1 bis 9 durchzuführen.

11. Kommunikationseinrichtung nach Anspruch 10, die in ein Chipsystem integriert ist, wobei das Chipsystem eine Verarbeitungsschaltung umfasst, wobei die Verarbeitungsschaltung mit einem Speichermedium gekoppelt ist; und
die Verarbeitungsschaltung dazu ausgelegt ist, einige oder alle Computerprogramme oder Anweisungen in dem Speichermedium auszuführen, und wenn die einigen oder alle Computerprogramme oder Anweisungen ausgeführt werden, das Verfahren nach einem der Ansprüche 1 bis 9 durchgeführt wird.

12. Computerlesbares Speichermedium, wobei das computerlesbare Speichermedium Anweisungen speichert und wenn die Anweisungen durch einen Computer ausgeführt werden, das Verfahren nach einem der Ansprüche 1 bis 9 durchgeführt wird.

13. Computerprogrammprodukt, das ein Computerprogramm oder Anweisungen umfasst, wobei, wenn das Computerprogrammprodukt auf einem Computer ausgeführt wird, das Verfahren nach einem der Ansprüche 1 bis 9 durchgeführt wird.

14. Kommunikationssystem, das Folgendes umfasst: eine Zugangsnetzvorrichtung, ein Zugangs- und Mobilitätsverwaltungsnetzelement und ein Multicast/Broadcast-Sitzungsverwaltungsnetzelement, wobei
die Zugangsnetzvorrichtung die Kommunikationseinrichtung nach Anspruch 10 umfasst; und
das Zugangs- und Mobilitätsverwaltungsnetzelement dazu ausgelegt ist, die Referenzinformationen der ersten MBS-Sitzung von dem Multicast/Broadcast-Sitzungsverwaltungsnetzelement zu empfangen und die Referenzinformationen der ersten MBS-Sitzung an die Zugangsnetzvorrichtung zu senden.

15. Kommunikationsverfahren nach Anspruch 1, das ferner die folgenden Schritte umfasst:
Erhalten (S201), durch ein Multicast/Broadcast-Sitzungsverwaltungsnetzelement, von Referenzinformationen einer ersten Multicast/Broadcast-Dienst- bzw. MBS-Sitzung, wobei die Referenzinformationen der ersten MBS-Sitzung ein Merkmal der ersten MBS-Sitzung angeben;
Senden (S202), durch das Multicast/Broadcast-Sitzungsverwaltungsnetzelement, der Referenzinformationen der ersten MBS-Sitzung an ein Zugangs- und Mobilitätsverwaltungsnetzelement;
Empfangen (S202), durch das Zugangs- und Mobilitätsverwaltungsnetzelement, der Referenzinformationen der ersten MBS-Sitzung;
Senden (S203), durch das Zugangs- und Mobilitätsverwaltungsnetzelement, der Referenzinformationen der ersten MBS-Sitzung an eine Zugangsnetzvorrichtung oder einen in einer Zugangsnetzvorrichtung angeordneten Chip.

## Revendications

1. Procédé de communication comprenant les étapes suivantes :
recevoir (S203, S306, S406, S611), par un dispositif de réseau d'accès ou une puce disposée à l'intérieur d'un dispositif de réseau d'accès, des informations de référence d'une première session de service de multidiffusion/diffusion, MBS, à partir d'un élément de réseau de gestion d'accès et de mobilité ; et
déclencher (S204, S307, S407, S612), par le dispositif de réseau d'accès ou la puce disposée au sein du dispositif de réseau d'accès, sur la base des informations de référence de la première session MBS, une première extrémité de réception correspondant à la première session MBS pour entrer dans un état inactif de contrôle des ressources radio, RRC,
et **caractérisé en ce que** les informations de référence de la première session MBS comprennent un ou plusieurs des éléments suivants : une exigence de fiabilité de la première session MBS, une priorité d'allocation et de rétention, ARP, de la première session MBS, dans lequel
l'exigence de fiabilité de la première session MBS est l'exigence de fiabilité la plus élevée parmi les exigences de fiabilité des identifiants de qualité de service, QoS, de cinquième génération, 5G, 5QIs, des flux de QoS de la première session MBS ; et dans lequel l'ARP de la première session MBS est l'ARP la plus faible parmi les ARP des flux de QoS de la première session MBS.

2. Procédé selon la revendication 1, dans lequel, lorsque les informations de référence de la première session MBS comprennent l'exigence de fiabilité de la première session MBS, le déclenchement, par le dispositif de réseau d'accès ou la puce disposée à l'intérieur du dispositif de réseau d'accès sur la base des informations de référence de la première session MBS, d'une première extrémité de réception correspondant à la première session MBS pour entrer dans un état RRC inactif comprend les étapes suivantes :
si l'exigence de fiabilité de la première session MBS est inférieure à un premier seuil, déclencher, par le dispositif de réseau d'accès ou la puce disposée à l'intérieur du dispositif de réseau d'accès, la première extrémité de réception correspondant à la première session MBS pour entrer dans l'état RRC inactif ; ou
si l'exigence de fiabilité de la première session MBS est l'exigence de fiabilité la plus faible parmi les exigences de fiabilité de toutes les sessions MBS du dispositif de réseau d'accès ou de la puce disposée à l'intérieur du dispositif de réseau d'accès, déclencher, par le dispositif de réseau d'accès ou la puce disposée à l'intérieur du dispositif de réseau d'accès, la première extrémité de réception correspondant à la première session MBS pour entrer dans l'état RRC inactif.

3. Procédé selon la revendication 1, dans lequel, lorsque les informations de référence de la première session MBS comprennent l'ARP de la première session MBS, le déclenchement, par le dispositif de réseau d'accès ou la puce disposée à l'intérieur du dispositif de réseau d'accès sur la base des informations de référence de la première session MBS, d'une première extrémité de réception correspondant à la première session MBS pour entrer dans un état RRC inactif comprend les étapes suivantes :
si l'ARP de la première session MBS est supérieure à un troisième seuil, déclencher, par le dispositif de réseau d'accès ou la puce disposée à l'intérieur du dispositif de réseau d'accès, la première extrémité de réception correspondant à la première session MBS pour entrer dans l'état RRC inactif ; ou
si l'ARP de la première session MBS est l'ARP la plus élevée parmi les ARP de toutes les sessions MBS du dispositif de réseau d'accès ou de la puce disposée à l'intérieur du dispositif de réseau d'accès, déclencher, par le dispositif de réseau d'accès ou la puce disposée à l'intérieur du dispositif de réseau d'accès, la première extrémité de réception correspondant à la première session MBS pour entrer dans l'état RRC inactif.

4. Procédé selon l'une quelconque des revendications 1 à 3, dans lequel la première extrémité de réception est une ou plusieurs des extrémités de réception correspondant à la première session MBS.

5. Procédé selon l'une quelconque des revendications 1 à 4, dans lequel, avant le déclenchement d'une première extrémité de réception correspondant à la première session MBS pour entrer dans un état RRC inactif, le procédé comprend en outre l'étape suivante :
déterminer, par le dispositif de réseau d'accès ou la puce disposée à l'intérieur du dispositif de réseau d'accès, qu'aucune donnée de service autre que les données de service de la première session MBS n'est transmise sur la première extrémité de réception.

6. Procédé selon la revendication 4 ou la revendication 5, le procédé comprenant en outre l'étape suivante :
recevoir, par le dispositif de réseau d'accès ou la puce disposée à l'intérieur du dispositif de réseau d'accès, des informations de référence de la première extrémité de réception en provenance de l'élément de réseau de gestion de session, les informations de référence de la première extrémité de réception comprenant un ou plusieurs des éléments suivants : une priorité de la première extrémité de réception dans la première session MBS, et des troisièmes informations d'indication indiquant que la première extrémité de réception est autorisée à recevoir les données de service de la première session MBS dans l'état RRC inactif ; et
le déclenchement d'une première extrémité de réception correspondant à la première session MBS pour entrer dans un état inactif de commande des ressources radio RRC comprend l'étape suivante :
déclencher, par le dispositif de réseau d'accès ou la puce disposée à l'intérieur du dispositif de réseau d'accès, sur la base des informations de référence de la première extrémité de réception, la première extrémité de réception pour entrer dans l'état RRC inactif.

7. Procédé selon la revendication 6, dans lequel, lorsque les informations de référence de la première extrémité de réception comprennent la priorité de la première extrémité de réception dans la première session MBS, le déclenchement, par le dispositif de réseau d'accès ou la puce disposée à l'intérieur du dispositif de réseau d'accès sur la base des informations de référence de la première extrémité de réception, de la première extrémité de réception pour entrer dans l'état RRC inactif comprend les étapes suivantes :
si la priorité de la première extrémité de réception dans la première session MBS est inférieure à une deuxième priorité prédéterminée, déclencher, par le dispositif de réseau d'accès ou la puce disposée à l'intérieur du dispositif de réseau d'accès, la première extrémité de réception pour entrer dans l'état RRC inactif ; ou
si la priorité de la première extrémité de réception dans la première session MBS est la priorité la plus faible parmi les priorités de toutes les extrémités de réception correspondant à la première session MBS, déclencher, par le dispositif de réseau d'accès ou la puce disposée à l'intérieur du dispositif de réseau d'accès, la première extrémité de réception pour entrer dans l'état RRC inactif.

8. Procédé selon l'une quelconque des revendications 1 à 7, dans lequel, avant le déclenchement, par le dispositif de réseau d'accès ou la puce disposée à l'intérieur du dispositif de réseau d'accès, sur la base des informations de référence de la première session MBS, d'une première extrémité de réception correspondant à la première session MBS pour entrer dans un état RRC inactif, le procédé comprend en outre les étapes suivantes :
déterminer, par le dispositif de réseau d'accès ou la puce disposée à l'intérieur du dispositif de réseau d'accès, qu'une quantité de terminaux qui sont dans un état RRC connecté et qui reçoivent des données de service d'une session MBS est supérieure à une valeur prédéterminée ; ou
déterminer, par le dispositif de réseau d'accès ou la puce disposée à l'intérieur du dispositif de réseau d'accès, qu'une quantité de terminaux dans un état RRC connecté est supérieure à une valeur prédéterminée.

9. Procédé selon l'une quelconque des revendications 1 à 8, dans lequel, avant le déclenchement, par le dispositif de réseau d'accès ou la puce disposée à l'intérieur du dispositif de réseau d'accès, sur la base des informations de référence de la première session MBS, d'une première extrémité de réception correspondant à la première session MBS pour entrer dans un état RRC inactif, le procédé comprend en outre les étapes suivantes :
ne recevoir, par le dispositif de réseau d'accès ou la puce disposée à l'intérieur du dispositif de réseau d'accès, aucune quatrième information d'indication, les quatrièmes informations d'indication indiquant que la première extrémité de réception n'est pas autorisée à recevoir les données de service de la première session MBS dans l'état RRC inactif, ou indiquant que la première extrémité de réception fournit un service de relais pour la première session MBS.

10. Appareil de communication, l'appareil de communication étant configuré pour réaliser le procédé selon l'une quelconque des revendications 1 à 9.

11. Appareil de communication selon la revendication 10, intégré dans un système de puce, le système de puce comprenant un circuit de traitement, le circuit de traitement étant couplé à un support de stockage ; et
le circuit de traitement étant configuré pour exécuter tout ou partie des programmes ou instructions informatiques du support d'enregistrement et, lorsque tout ou partie des programmes ou instructions informatiques sont exécutés, le procédé selon l'une quelconque des revendications 1 à 9 est réalisé.

12. Support de stockage lisible par ordinateur, le support de stockage lisible par ordinateur stockant des instructions et, lorsque les instructions sont exécutées par un ordinateur, le procédé selon l'une quelconque des revendications 1 à 9 étant mis en œuvre.

13. Produit programme informatique comprenant un programme ou des instructions informatiques, dans lequel lorsque le produit programme informatique est exécuté sur un ordinateur, le procédé selon l'une quelconque des revendications 1 à 9 est mis en œuvre.

14. Système de communication comprenant : un dispositif de réseau d'accès, un élément de réseau de gestion d'accès et de mobilité, et un élément de réseau de gestion de session de multidiffusion/diffusion, dans lequel
le dispositif de réseau d'accès comprend l'appareil de communication selon la revendication 10 ; et
l'élément de réseau de gestion d'accès et de mobilité est configuré pour recevoir les informations de référence de la première session MBS de l'élément de réseau de gestion de session de multidiffusion/diffusion, et pour envoyer les informations de référence de la première session MBS au dispositif de réseau d'accès.

15. Procédé de communication selon la revendication 1 comprenant en outre les étapes suivantes :
obtenir (S201), par un élément de réseau de gestion de session multidiffusion/diffusion, des informations de référence d'une première session MBS de service de multidiffusion/diffusion, les informations de référence de la première session MBS indiquant une caractéristique de la première session MBS ;
envoyer (S202), par l'élément de réseau de gestion de session de multidiffusion/diffusion, les informations de référence de la première session MBS à un élément de réseau de gestion d'accès et de mobilité ;
recevoir (S202), par l'élément de réseau de gestion d'accès et de mobilité, les informations de référence de la première session MBS ;
envoyer (S203), par l'élément de réseau de gestion d'accès et de mobilité, les informations de référence de la première session MBS à un dispositif de réseau d'accès ou une puce disposée à l'intérieur d'un dispositif du réseau d'accès ;
